# EUROPEAN PATENT APPLICATION

(11) **EP 4 611 297 A1**
(43) Date of publication of application: **03.09.2025**
(21) Application number: 23881835.5
(22) Date of filing: 24.10.2023
(51) Int. Cl.: H04L 5/00

(54) **METHOD AND APPARATUS FOR WIRELESS COMMUNICATIONS**

(30) Priority: 26.10.2022 CN 202211317912
(71) Applicant: Apogee Networks, LLC, Dallas, TX 75201 (US)
(72) Inventor: WU, Keying, Shanghai 201206 (CN); ZHANG, Xiaobo, Shanghai 201206 (CN)
(74) Representative: Gunzelmann, Rainer
(86) International application number: PCT/CN2023/126233
(87) International publication number: WO 2024/088257

(57) **Abstract**

Disclosed in the present application are a method and apparatus for wireless communications. The method comprises: a first node receiving a first information block and a first reporting configuration; and sending a set of first CSI. The first information block is used for determining a first time domain resource, and the first reporting configuration is used for determining a set of first reference signal resources; only a reference signal, which is associated with the set of first reference signal resources, in a set of first transmission occasions is used for obtaining channel measurement for calculating the set of first CSI; a first transmission occasion is a transmission occasion for a reference signal associated with the set of first reference signal resources, and the first transmission occasion is not later than a first reference resource in a time domain; and whether the first transmission occasion belongs to the set of first transmission occasions depends on whether a first condition is met, and the first condition is related to whether the first transmission occasion overlaps with the first time domain resource in the time domain. The method improves the flexibility and accuracy of channel measurement.

## Description

### Technical Field

The present invention relates to a method and an apparatus in a wireless communication system, and in particular, to a CSI (Channel State Information, channel state information) solution and apparatus in a wireless communication system.

### Related Art

In conventional wireless communication, a base station selects suitable transmission parameters for a UE (User Equipment, user equipment) based on CSI reported by the UE. The parameters are, for example, an MCS (Modulation and Coding Scheme, modulation and coding scheme), a TPMI (Transmitted Precoding Matrix Indicator, transmitted precoding matrix indicator), and a TCI (Transmission Configuration Indication, transmission configuration indication). Typical CSI includes, for example, at least one of a CRI (CSI-RS Resource Indicator, channel state information-reference signal resource indicator), an RI (Rank Indicator, rank indicator), a PMI (Precoding Matrix Indicator, precoding matrix indicator) or CQI (Channel quality indicator, channel quality indicator), an L1-RSRP (Layer 1 reference signal received power, Layer 1 reference signal received power), and an L1-SINR (Layer 1 signal-to-noise and interference ratio, Layer 1 signal-to-noise and interference ratio).

To calculate CSI, UE is configured with a reference signal for channel measurement. The UE only obtains, based on a reference signal configured for channel measurement in one or more transmission occasions (transmission occasion), channel measurement for calculating CSI.

### SUMMARY

In an NR (New Radio, New Radio) system, a subband full duplex (SBFD, Subband Full Duplex) is proposed, in which one communication device performs reception and transmission operations on two subbands simultaneously. The inventors find through research that in SBFD or other application scenarios, an existing reference signal resource and/or CSI calculation scheme may be no longer applicable.

In view of the foregoing problems, this application discloses a solution. It needs to be noted that although this application is originally intended to provide description for an SBFD scenario, this application is also applicable to a non-SBFD scenario. Further, adopting a unified design solution for different scenarios (including, but not limited to, SBFD, another flexible duplex mode or full duplex mode, a variable link direction mode, and a conventional duplex mode) also helps reduce hardware complexity and costs. An embodiment in any node of this application and features in the embodiment may be applied to any other node without causing any conflict. Embodiments of this application and features in the embodiments may be combined with each other in any manner without causing any conflict.

As an embodiment, the interpretation of terminology (Terminology) in this application is based on the definitions provided in the 3GPP TS 36 series technical specifications.

As an embodiment, the interpretation of terminology in this application is based on the definitions provided in the 3GPP TS 38 series technical specifications.

As an embodiment, the interpretation of terminology in this application is based on the definitions provided in the 3GPP TS 37 series technical specifications.

As an embodiment, the interpretation of terminology in this application is based on the definitions provided in the IEEE (Institute of Electrical and Electronics Engineers, Institute of Electrical and Electronics Engineers) technical specifications.

This application discloses a method in a first node used in wireless communication, including:
receiving a first information block and a first reporting configuration, the first information block being used for determining a first time domain resource, and the first reporting configuration being used for determining a first reference signal resource set; and
transmitting a first CSI set, where
the first reporting configuration is applied to the first CSI set; only a reference signal in a first transmission occasion set that is associated with the first reference signal resource set is used for obtaining channel measurement for calculating the first CSI set; the first time domain resource includes at least one symbol; a first transmission occasion is one transmission occasion for a reference signal associated with the first reference signal resource set, the first transmission occasion is not later than a first reference resource in a time domain, and the first reference resource is a CSI reference resource of the first CSI set; and whether the first transmission occasion belongs to the first transmission occasion set depends on whether a first condition is met, and the first condition is related to whether the first transmission occasion overlaps with the first time domain resource in the time domain.

As an embodiment, a characteristic of the foregoing method includes: determining, based on whether time domain resources occupied by one reference signal transmission occasion overlap with the first time domain resource, whether the transmission occasion is used for obtaining channel measurement for calculating CSI.

As an embodiment, benefits of the foregoing method include: the flexibility of the channel measurement for calculating CSI is improved.

As an embodiment, benefits of the foregoing method include: the flexibility of CSI calculation is improved.

As an embodiment, benefits of the foregoing method include: good backward compatibility is also kept.

As an embodiment, benefits of the foregoing method include: the accuracy of channel measurement and CSI calculation is improved.

According to an aspect of this application, the first condition is related to the first reporting configuration.

According to an aspect of this application, the first condition is related to time domain resources occupied by the first CSI set.

According to an aspect of this application, if and only if a second condition is met, whether the first transmission occasion belongs to the first transmission occasion set depends on whether the first condition is met.

According to an aspect of this application, the first reporting configuration is used for determining a second frequency domain resource, and frequency domain resources to which the first CSI set is related are the second frequency domain resource; and the second condition includes: the second frequency domain resource overlaps with a first frequency domain resource.

According to an aspect of this application, the first information block is used for determining the first frequency domain resource.

According to an aspect of this application, the second condition includes: the time domain resources occupied by the first CSI set overlap with the first time domain resource.

According to an aspect of this application, the first node is a user equipment.

According to an aspect of this application, the first node is a relay node.

This application discloses a method in a second node used in wireless communication, including:
transmitting a first information block and a first reporting configuration, the first information block being used for determining a first time domain resource, and the first reporting configuration being used for determining a first reference signal resource set; and
receiving a first CSI set, where
the first reporting configuration is applied to the first CSI set; only a reference signal in a first transmission occasion set that is associated with the first reference signal resource set is used for obtaining channel measurement for calculating the first CSI set; the first time domain resource includes at least one symbol; a first transmission occasion is one transmission occasion for a reference signal associated with the first reference signal resource set, the first transmission occasion is not later than a first reference resource in a time domain, and the first reference resource is a CSI reference resource of the first CSI set; and whether the first transmission occasion belongs to the first transmission occasion set depends on whether a first condition is met, and the first condition is related to whether the first transmission occasion overlaps with the first time domain resource in the time domain.

According to an aspect of this application, the first condition is related to the first reporting configuration.

According to an aspect of this application, the first condition is related to time domain resources occupied by the first CSI set.

According to an aspect of this application, if and only if a second condition is met, whether the first transmission occasion belongs to the first transmission occasion set depends on whether the first condition is met.

According to an aspect of this application, the first reporting configuration is used for determining a second frequency domain resource, and frequency domain resources to which the first CSI set is related are the second frequency domain resource; and the second condition includes: the second frequency domain resource overlaps with a first frequency domain resource.

According to an aspect of this application, the first information block is used for determining the first frequency domain resource.

According to an aspect of this application, the second condition includes: the time domain resources occupied by the first CSI set overlap with the first time domain resource.

According to an aspect of this application, the second node is a base station.

According to an aspect of this application, the second node is a user equipment.

According to an aspect of this application, the second node is a relay node.

This application discloses a first node device for wireless communication, including:
a first receiver, receiving a first information block and a first reporting configuration, the first information block being used for determining a first time domain resource, and the first reporting configuration being used for determining a first reference signal resource set; and
a first transmitter, transmitting a first CSI set, where
the first reporting configuration is applied to the first CSI set; only a reference signal in a first transmission occasion set that is associated with the first reference signal resource set is used for obtaining channel measurement for calculating the first CSI set; the first time domain resource includes at least one symbol; a first transmission occasion is one transmission occasion for a reference signal associated with the first reference signal resource set, the first transmission occasion is not later than a first reference resource in a time domain, and the first reference resource is a CSI reference resource of the first CSI set; and whether the first transmission occasion belongs to the first transmission occasion set depends on whether a first condition is met, and the first condition is related to whether the first transmission occasion overlaps with the first time domain resource in the time domain.

This application discloses a second node device for wireless communication, including:
a second transmitter, transmitting a first information block and a first reporting configuration, the first information block being used for determining a first time domain resource, and the first reporting configuration being used for determining a first reference signal resource set; and
a second receiver, receiving a first CSI set, where
the first reporting configuration is applied to the first CSI set; only a reference signal in a first transmission occasion set that is associated with the first reference signal resource set is used for obtaining channel measurement for calculating the first CSI set; the first time domain resource includes at least one symbol; a first transmission occasion is one transmission occasion for a reference signal associated with the first reference signal resource set, the first transmission occasion is not later than a first reference resource in a time domain, and the first reference resource is a CSI reference resource of the first CSI set; and whether the first transmission occasion belongs to the first transmission occasion set depends on whether a first condition is met, and the first condition is related to whether the first transmission occasion overlaps with the first time domain resource in the time domain.

As an embodiment, compared with a conventional solution, this application has the following advantages:
The flexibility of channel measurement for calculating CSI and the flexibility of CSI calculation are improved.

The accuracy of channel measurement and CSI calculation is improved.

Good backward compatibility is also kept.

### BRIEF DESCRIPTION OF THE DRAWINGS

Other features, objectives, and advantages of this application will become more obvious by reading detailed description of nonlimitative embodiments with reference to the following accompanying drawings:
FIG. 1 is a flowchart of a first information block, a first reporting configuration, and a first CSI set according to an embodiment of this application;
FIG. 2 is a schematic diagram of a network architecture according to an embodiment of this application;
FIG. 3 is a schematic diagram of an embodiment of a radio protocol architecture of a user plane and a control plane according to an embodiment of this application;
FIG. 4 is a schematic diagram of a first communication device and a second communication device according to an embodiment of this application;
FIG. 5 shows transmission between a first node and a second node according to an embodiment of this application;
FIG. 6 is a schematic diagram of a first information block being used for determining a first time domain resource according to an embodiment of this application;
FIG. 7 is a schematic diagram of a first information block being used for determining a first time domain resource according to an embodiment of this application;
FIG. 8 is a schematic diagram of a first information block being used for determining a second time domain resource according to an embodiment of this application;
FIG. 9 is a schematic diagram of a first condition according to an embodiment of this application;
FIG. 10 is a schematic diagram of a first condition according to an embodiment of this application;
FIG. 11 is a schematic diagram of a first condition according to an embodiment of this application;
FIG. 12 is a schematic diagram of whether a first transmission occasion belongs to a first transmission occasion set depending on whether a first condition is met if and only if a second condition is met according to an embodiment of this application;
FIG. 13 is a schematic diagram of a first reporting configuration being used for determining a second frequency domain resource according to an embodiment of this application;
FIG. 14 is a schematic diagram of a second condition including a second frequency domain resource overlapping with a first frequency domain resource according to an embodiment of this application;
FIG. 15 is a schematic diagram of a first information block being used for determining a first frequency domain resource according to an embodiment of this application;
FIG. 16 is a schematic diagram of a second condition including time domain resources occupied by a first CSI set overlapping with a first time domain resource according to an embodiment of this application;
FIG. 17 is a schematic diagram of a first time domain resource being used for determining a first reference resource according to an embodiment of this application;
FIG. 18 is a structural block diagram of a processing apparatus for a first node according to an embodiment of this application; and
FIG. 19 is a structural block diagram of a processing apparatus for a second node according to an embodiment of this application.

### DETAILED DESCRIPTION

The technical solutions of this application are further described below in detail with reference to the accompanying drawings. It needs to be noted that the embodiments in this application and the features in the embodiments may be combined with each other in any manner without causing any conflict.

### Embodiment 1

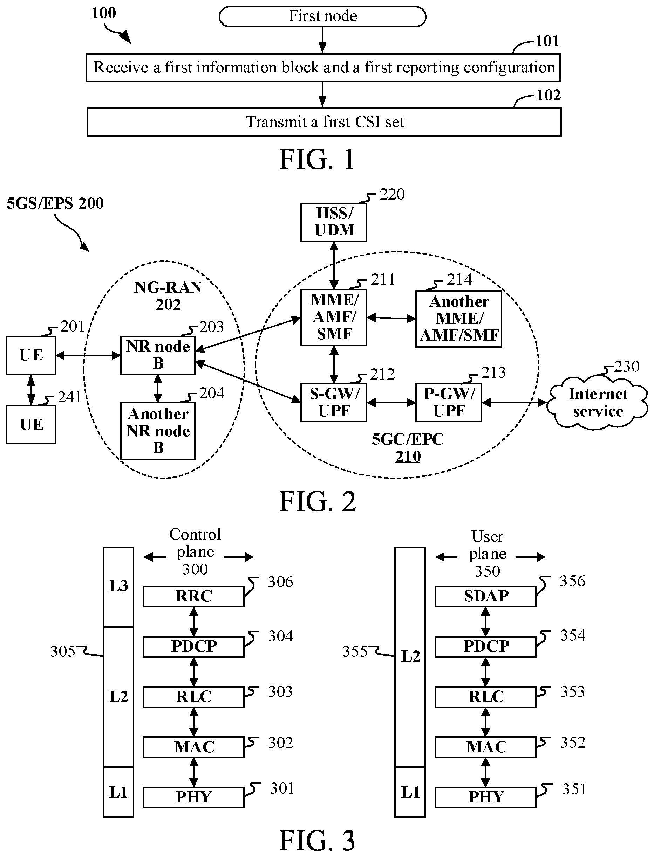

Embodiment 1 provides a flowchart of a first information block, a first reporting configuration, and a first CSI set according to an embodiment of this application, as shown in FIG. 1. In 100 shown in FIG. 1, each box represents one step. Particularly, the order of the steps in the boxes does not represent a particular time sequence between the steps.

In Embodiment 1, a first node in this application receives a first information block and a first reporting configuration in Step 101, and transmits a first CSI set in Step 102. The first information block is used for determining a first time domain resource, and the first reporting configuration is used for determining a first reference signal resource set. The first reporting configuration is applied to the first CSI set; only a reference signal in a first transmission occasion set that is associated with the first reference signal resource set is used for obtaining channel measurement for calculating the first CSI set; the first time domain resource includes at least one symbol; a first transmission occasion is one transmission occasion for a reference signal associated with the first reference signal resource set, the first transmission occasion is not later than a first reference resource in a time domain, and the first reference resource is a CSI reference resource of the first CSI set; and whether the first transmission occasion belongs to the first transmission occasion set depends on whether a first condition is met, and the first condition is related to whether the first transmission occasion overlaps with the first time domain resource in the time domain.

As an embodiment, the first information block is carried by higher layer (higher layer) signaling.

As an embodiment, the first information block is carried by RRC (Radio Resource Control, radio resource control) signaling.

As an embodiment, the first information block includes information in all or some fields (field) in one RRC IE (Information Element, information element).

As an embodiment, the first information block includes information in all or some fields in each RRC IE in a plurality of RRC IEs.

As an embodiment, the first information block includes information in all or some fields in a TDD-UL-DL-ConfigCommon IE.

As an embodiment, the first information block includes information in all or some fields in a TDD-UL-DL-ConfigDedicated IE.

As an embodiment, the first information block includes information in all or some fields in a ServingCellConfig IE.

As an embodiment, the first information block includes information in all or some fields in a ServingCellConfigCommonSIB IE.

As an embodiment, the first information block includes information in all or some fields in a ServingCellConfigCommon IE.

As an embodiment, the first information block is carried by a MAC CE (Media Access Control layer Control Element, media access control layer control element).

As an embodiment, the first information block includes an MAC CE.

As an embodiment, the first information block is carried by DCI (Downlink control information, downlink control information).

As an embodiment, the first information block includes DCI.

As an embodiment, the first information block includes information in one or more fields in DCI.

As an embodiment, the first information block is carried by DCI format 2_0.

As an embodiment, the first information block includes DCI format 2_0.

As an embodiment, the first information block is carried jointly by RRC signaling and a MAC CE.

As an embodiment, the first information block is carried jointly by higher layer (higher layer) signaling and DCI.

As an embodiment, the first information block includes information in all or some fields in at least one RRC IE and information in all or some fields in at least one DCI.

As a sub-embodiment of the foregoing embodiment, the at least one DCI includes DCI format 2_0.

As an embodiment, the first information block is later than the first reporting configuration in the time domain.

As an embodiment, the first information block is earlier than the first reporting configuration in the time domain.

As an embodiment, the first time domain resource includes one symbol.

As an embodiment, the first time domain resource includes a plurality of symbols that are contiguous in the time domain.

As an embodiment, the first time domain resource includes a plurality of symbols that are not contiguous in the time domain.

As an embodiment, the first time domain resource includes at least one slot.

As an embodiment, the first time domain resource includes at least one subframe (subframe).

As an embodiment, the first information block indicates the first time domain resource.

As an embodiment, a transmitter of the first information block simultaneously receives and transmits radio signals in the first time domain resource.

As an embodiment, a transmitter of the first information block may simultaneously receive and transmit radio signals in the first time domain resource.

As an embodiment, a transmitter of the first information block simultaneously receives and transmits radio signals in at least one symbol in the first time domain resource.

As an embodiment, a transmitter of the first information block simultaneously receives and transmits radio signals in any symbol in the first time domain resource.

As an embodiment, a transmitter of the first information block simultaneously receives and transmits radio signals in the first time domain resource in a cell in which the first reference signal resource set is located.

As an embodiment, a transmitter of the first information block simultaneously receives and transmits radio signals in the first time domain resource in a cell in which the first CSI set is located.

As an embodiment, a transmitter of the first information block simultaneously receives and transmits radio signals in the first time domain resource in a BWP (BandWidth Part, bandwidth part) to which the first reference signal resource set belongs.

As an embodiment, a transmitter of the first information block simultaneously receives and transmits radio signals in the first time domain resource in a BWP to which the first CSI set belongs.

As an embodiment, the first time domain resource includes symbols that are simultaneously used for uplink and downlink.

As an embodiment, symbols in the first time domain resource may be simultaneously used for uplink and downlink.

As an embodiment, symbols in the first time domain resource are simultaneously used for uplink and downlink.

As an embodiment, any symbol in the first time domain resource may be simultaneously used for uplink and downlink.

As an embodiment, any symbol in the first time domain resource is simultaneously used for uplink and downlink.

As an embodiment, at least one symbol in the first time domain resource is simultaneously used for uplink and downlink.

As an embodiment, at least one symbol in the first time domain resource is configured as uplink (uplink) in a first frequency domain resource.

As an embodiment, any symbol in the first time domain resource is configured as uplink (uplink) in a first frequency domain resource.

As an embodiment, at least one symbol in the first time domain resource is configured as uplink (uplink) in a first frequency domain resource and is configured as downlink (downlink) in a third frequency domain resource; and the first frequency domain resource and the third frequency domain resource are orthogonal with each other in a frequency domain.

As an embodiment, any symbol in the first time domain resource is configured as uplink in a first frequency domain resource and is configured as downlink in a third frequency domain resource; and the first frequency domain resource and the third frequency domain resource are orthogonal with each other in a frequency domain.

As an embodiment, at least one symbol in the first time domain resource is used for uplink (uplink) in a first frequency domain resource.

As an embodiment, any symbol in the first time domain resource is used for uplink (uplink) in a first frequency domain resource.

As an embodiment, at least one symbol in the first time domain resource is used for uplink (uplink) in a first frequency domain resource and is used for downlink (downlink) in a third frequency domain resource; and the first frequency domain resource and the third frequency domain resource are orthogonal with each other in a frequency domain.

As an embodiment, any symbol in the first time domain resource is used for uplink in a first frequency domain resource and is used for downlink in a third frequency domain resource; and the first frequency domain resource and the third frequency domain resource are orthogonal with each other in a frequency domain.

As an embodiment, the first frequency domain resource and the third frequency domain resource belong to one same BWP.

As an embodiment, at least one symbol in the first time domain resource is configured as uplink in some RBs (Resource Block, resource block) in one BWP, and is configured as downlink in some other RBs in the BWP.

As an embodiment, symbols in the first time domain resource are simultaneously used for uplink and downlink in a cell in which the first reference signal resource set is located.

As an embodiment, symbols in the first time domain resource are simultaneously used for uplink and downlink in a cell in which the first CSI set is located.

As an embodiment, symbols in the first time domain resource are simultaneously used for uplink and downlink in a BWP to which the first reference signal resource set belongs.

As an embodiment, symbols in the first time domain resource are simultaneously used for uplink and downlink in a BWP to which the first CSI set belongs.

As an embodiment, the first time domain resource does not include symbols used for transmitting a first type downlink signal, and the first type downlink signal includes one or more of an SS/PBCH (Synchronisation Signal/Physical Broadcast Channel) block, a CORESET (COntrol REsource SET, control resource set) with an index of 0, or a SIB (System Information Block, system information block).

As an embodiment, the first time domain resource is used for a full duplex mode.

As an embodiment, the first time domain resource is used by a transmitter of the first information block for a full duplex mode.

As an embodiment, the first time domain resource is used for a full duplex mode in a cell to which the first reference signal resource set belongs.

As an embodiment, the first time domain resource is used for a full duplex mode in a BWP to which the first reference signal resource set belongs.

As an embodiment, the symbol includes an OFDM (Orthogonal Frequency Division Multiplexing, Orthogonal Frequency Division Multiplexing) symbol.

As an embodiment, the symbol is an OFDM symbol.

As an embodiment, the symbol includes a DFT-S-OFDM (Discrete Fourier Transform Spread OFDM, discrete Fourier transform spread Orthogonal Frequency Division Multiplexing) symbol.

As an embodiment, the symbol is obtained after an output of transform precoding (transform precoding) undergoes OFDM symbol generation (Generation).

As an embodiment, the first reference signal resource set includes at least one reference signal resource.

As an embodiment, the first reference signal resource set includes at least one CSI-RS (Channel State Information-Reference Signal, channel state information-reference signal) resource set.

As an embodiment, the first reference signal resource set is a CSI-RS resource set.

As an embodiment, the first reference signal resource set is identified by NZP-CSI-RS-ResourceSetId.

As an embodiment, the first reference signal resource set is configured by NZP-CSI-RS-ResourceSet IE.

As an embodiment, any reference signal resource in the first reference signal resource set is a CSI-RS resource.

As an embodiment, one reference signal resource existing in the first reference signal resource set is a CSI-RS resource.

As an embodiment, one reference signal resource existing in the first reference signal resource set is an SS/PBCH Block resource.

As an embodiment, any reference signal resource in the first reference signal resource set is an SS/PBCH Block resource.

As an embodiment, any reference signal resource in the first reference signal resource set includes a CSI-RS resource or an SS/PBCH Block resource.

As an embodiment, any reference signal resource in the first reference signal resource set is a CSI-RS resource or an SS/PBCH Block resource.

As an embodiment, the reference signal resource includes a reference signal port.

As an embodiment, the first reference signal resource includes an antenna port.

As an embodiment, all RBs that any reference signal resource in the first reference signal resource set spans across (across) are contiguous in a frequency domain.

As an embodiment, for any given reference signal resource in the first reference signal resource set, when the given reference signal resource is one CSI-RS resource, if a density (density) of the given reference signal resource is not less than 1, RBs occupied by the given reference signal resource are RBs that the given reference signal resource spans across (across); and if the density (density) of the given reference signal resource is 0.5, the given reference signal resource occupies all odd (odd) RBs or all even (even) RBs in RBs that the given reference signal resource spans across (across).

As an embodiment, for any given reference signal resource in the first reference signal resource set, when the given reference signal resource is an SS/PBCH Block resource, RBs occupied by the given reference signal resource are RBs that the given reference signal resource spans across (across).

As an embodiment, a density of one CSI-RS resource is a frequency domain density of the CSI-RS resource.

As an embodiment, a density of one CSI-RS resource is the number of REs (Resource Element, resource element) occupied by the CSI-RS resource per RB per port (port).

As an embodiment, a density of one CSI-RS resource is indicated by CSI-RS-ResourceMapping configuring the CSI-RS resource.

As an embodiment, a density of one CSI-RS resource is indicated by a density field in CSI-RS-ResourceMapping configuring the CSI-RS resource.

As an embodiment, the first reporting configuration is one CSI reporting configuration.

As an embodiment, the first reporting configuration is carried by higher layer (higher layer) signaling.

As an embodiment, the first reporting configuration is carried by RRC signaling.

As an embodiment, the first reporting configuration is carried by at least one RRC IE.

As an embodiment, the first reporting configuration is one RRC IE.

As an embodiment, the first reporting configuration is one RRC IE, and a name of the first reporting configuration includes "CSI-ReportConfig".

As an embodiment, the first reporting configuration includes information in all or some fields in one CSI-ReportConfig IE.

As an embodiment, the first reporting configuration is one CSI-ReportConfig IE.

As an embodiment, the first reporting configuration is periodic (periodic).

As an embodiment, the first reporting configuration is semi-persistent (semi-persistent).

As an embodiment, the first reporting configuration is aperiodic (aperiodic).

As an embodiment, the first reporting configuration is identified by one CSI-ReportConfigId.

As an embodiment, the first reporting configuration indicates the first reference signal resource set.

As an embodiment, the first reporting configuration includes a first higher layer parameter, and the first higher layer parameter is used for determining the first reference signal resource set; and a name of the first higher layer parameter includes "ChannelMeasurement".

As an embodiment, the first higher layer parameter is a higher layer parameter "resourcesForChannelMeasurement".

As an embodiment, the first higher layer parameter indicates the first reference signal resource set.

As an embodiment, the first reporting configuration indicates Q1 reference signal resource sets, Q1 is a positive integer greater than 1, and the first reference signal resource set is one of the Q1 reference signal resource sets; a second information block is used for determining the first reference signal resource set from the Q1 reference signal resource sets; and the second information block includes all or a part of information in a CSI-AperiodicTriggerStateList IE.

As a sub-embodiment of the foregoing embodiment, the first higher layer parameter indicates the Q1 reference signal resource sets.

As a sub-embodiment of the foregoing embodiment, the second information block indicates the first reference signal resource set from the Q1 reference signal resource sets.

As a sub-embodiment of the foregoing embodiment, any reference signal resource in the Q1 reference signal resource sets includes a CSI-RS resource or an SS/PBCH Block resource.

As a sub-embodiment of the foregoing embodiment, any reference signal resource set in the Q1 reference signal resource sets is identified by one NZP-CSI-RS-ResourceSetId or CSI-SSB-ResourceSetId.

As an embodiment, the first CSI set includes at least one CSI (Channel State Information, channel state information).

As an embodiment, any CSI in the first CSI set is one of a CQI (channel quality indicator), a PMI (precoding matrix indicator), a CRI (CSI-RS resource indicator), an LI (layer indicator), an RI (rank indicator), an SSBRI (SS/PBCH block resource indicator), an L1-RSRP (Layer 1-reference signal received power), or an L1-SINR (Layer 1-signal-to-interference and noise ratio).

As an embodiment, any CSI in the first CSI set is one of a CQI, a PMI, a CRI, an LI, an RI, an SSBRI, an L1-RSRP, an L1-SINR, a capability index, or a capability set index.

As an embodiment, the first CSI set includes an RI.

As an embodiment, the first CSI set includes a CRI.

As an embodiment, the first CSI set includes a CQI.

As an embodiment, the first CSI set includes one wideband (wideband) CQI.

As an embodiment, the first CSI set includes at least one subband (subband) CQI.

As an embodiment, the first CSI set includes a PMI.

As an embodiment, the first CSI set includes one wideband (wideband) PMI.

As an embodiment, the first CSI set includes at least one subband (subband) PMI.

As an embodiment, the first CSI set includes a first CQI, a first PMI, a first RI, and a first CRI; and the first CQI is calculated by using the first PMI, the first RI, and the first CRI as conditions.

As an embodiment, the first CSI set includes a first CQI, a first RI, and a first CRI; and the first CQI is calculated by using the first RI and the first CRI as conditions.

As an embodiment, the first CSI set includes a first CQI and a first RI; and the first CQI is calculated by using the first RI as a condition.

As an embodiment, the first CSI set includes a first CQI and a first CRI; and the first CQI is calculated by using the first CRI as a condition.

As an embodiment, the first CSI set includes a first PMI, a first RI, and a first CRI; and the first PMI is calculated by using the first RI and the first CRI as conditions.

As an embodiment, the first CSI set includes a first RI and a first CRI; and the first RI is calculated by using the first CRI as a condition.

As an embodiment, the first CSI set is one CSI report for the first reporting configuration.

As an embodiment, the first CSI set includes a CSI report quantity (report quantity) reported in one CSI report for the first reporting configuration by the first node.

As an embodiment, the meaning of the sentence "the first reporting configuration is applied to the first CSI set" includes: the first reporting configuration is used for determining one or more reference signal resources used for obtaining channel measurement for calculating the first CSI set.

As an embodiment, the meaning of the sentence "the first reporting configuration is applied to the first CSI set" includes: the first reporting configuration is used for determining one or more resources used for obtaining interference measurement for calculating the first CSI set.

As a sub-embodiment of the foregoing embodiment, the resource includes at least one of a CSI-RS resource or a CSI-IM resource.

As an embodiment, the meaning of the sentence "the first reporting configuration is applied to the first CSI set" includes: the first reporting configuration is used for indicating which CSI report quantities (report quantity) are included in the first CSI set.

As an embodiment, the CSI report quantity includes a CQI, a PMI, a CRI, an LI, an RI, an SSBRI, an L1-RSRP, and an L1-SINR.

As an embodiment, the CSI report quantity further includes at least one of a capability index or a capability set index.

As an embodiment, the meaning of the sentence "the first reporting configuration is applied to the first CSI set" includes: the first reporting configuration is used for indicating frequency domain resources to which the first CSI set is related.

As an embodiment, the meaning of the sentence "the first reporting configuration is applied to the first CSI set" includes: the first reporting configuration indicates PUCCH (Physical Uplink Control Channel, physical uplink control channel) resources used for transmitting the first CSI set.

As an embodiment, the meaning of the sentence "the first reporting configuration is applied to the first CSI set" includes: the first reporting configuration indicates values of some or all higher layer parameters in higher layer parameters "resourcesForChannelMeasurement", "csi-IM-ResourcesForInterference", "reportQuantity", "nzp-CSI-RS-ResourcesForInterference", "reportConfigType", "reportFreqConfiguration", "timeRestrictionForChannelMeasurements", "timeRestrictionForInterferenceMeasurements", "subbandSize", and "codebookConfig" corresponding to the first CSI set.

As an embodiment, the first reference signal resource set is a reference signal resource set that is associated with the first CSI set and is used for channel measurement.

As an embodiment, the first reference signal resource set is a reference signal resource set that is indicated by the first reporting configuration and is used for channel measurement.

As an embodiment, the first transmission occasion set includes at least one transmission occasion (transmission occasion).

As an embodiment, the first transmission occasion set includes only one transmission occasion.

As an embodiment, the first transmission occasion set includes a plurality of transmission occasions.

As an embodiment, any transmission occasion in the first transmission occasion set is one transmission occasion of one reference signal associated with the first reference signal resource set.

As an embodiment, any transmission occasion in the first transmission occasion set is one transmission occasion of a reference signal transmitted in one reference signal resource in the first reference signal resource set.

As an embodiment, any transmission occasion in the first transmission occasion set is not later than the first reference resource in the time domain.

As an embodiment, the reference signal associated with the first reference signal resource set includes: a reference signal transmitted in the first reference signal resource set.

As an embodiment, the reference signal associated with the first reference signal resource set includes: a reference signal transmitted in a reference signal resource in the first reference signal resource set.

As an embodiment, the reference signal associated with the first reference signal resource set is a reference signal transmitted in the first reference signal resource set.

As an embodiment, the reference signal associated with the first reference signal resource set is a reference signal transmitted in a reference signal resource in the first reference signal resource set.

As an embodiment, for any given reference signal associated with the first reference signal resource set, a given transmission occasion is any transmission occasion of the given reference signal that is not later than the first reference resource and does not belong to the first transmission occasion set, and the given reference signal in the given transmission occasion is not used for obtaining channel measurement for calculating the first CSI set.

As an embodiment, the meaning of the sentence "only a reference signal in a first transmission occasion set that is associated with the first reference signal resource set is used for obtaining channel measurement for calculating the first CSI set" includes: only channel measurement of a reference signal that is transmitted in the first transmission occasion set and is associated with the first reference signal resource set is used for calculating the first CSI set.

As an embodiment, the meaning of the sentence "only a reference signal in a first transmission occasion set that is associated with the first reference signal resource set is used for obtaining channel measurement for calculating the first CSI set" includes: only measurement of a reference signal that is transmitted in the first transmission occasion set and is associated with the first reference signal resource set is used for generating channel information for calculating the first CSI set.

As an embodiment, the CSI reference resource means a CSI reference resource.

As an embodiment, for the definition of the CSI reference resource, refer to 3GPP TS 38.214.

As an embodiment, the first reference resource includes REs (Resource Element, resource element) of which the number is a positive integer.

As an embodiment, one RE occupies one symbol in the time domain, and occupies one subcarrier in the frequency domain.

As an embodiment, the first reference resource includes at least one symbol in the time domain.

As an embodiment, the first reference resource includes a plurality of contiguous symbols in the time domain.

As an embodiment, the first reference resource includes one slot (slot) in the time domain.

As an embodiment, the first reference resource includes one subframe (subframe) in the time domain.

As an embodiment, the first reference resource includes at least one subband (subband) in the frequency domain.

As an embodiment, the first reference resource includes at least one RB in the frequency domain.

As an embodiment, the first reference resource includes a group of downlink physical resource blocks.

As an embodiment, the first CSI set includes a first CQI, one corresponding modulation scheme (modulation scheme) adopting the first CQI, and a combination of a target code rate (target code rate) and a TBS (Transport Block Size), occupies a TB (Transport Block, transport block) of the first reference resource, and can be received with a transport block error probability (TB error probability) that does not exceed a first threshold; and the first threshold is a positive real number less than 1.

As an embodiment, the first CSI set includes a first CQI, one corresponding modulation scheme adopting the first CQI, and a combination of a target code rate and a TBS, occupies a TB of the first reference resource located in the first time domain resource, and can be received with a transport block error probability that does not exceed a first threshold; and the first threshold is a positive real number less than 1.

As an embodiment, the first CSI set includes a first CQI, one corresponding modulation scheme adopting the first CQI, and a combination of a target code rate and a TBS, occupies a TB of the first reference resource orthogonal with the first time domain resource, and can be received with a transport block error probability that does not exceed a first threshold; and the first threshold is a positive real number less than 1.

As an embodiment, to obtain the first CQI, the first node assumes that the first reference resource belongs to the first time domain resource in the time domain.

As an embodiment, to obtain the first CQI, the first node assumes that interference measurement on the first reference resource may be obtained from interference measurement on at least one symbol in the first time domain resource.

As an embodiment, to obtain the first CQI, the first node assumes that the first reference resource orthogonal with the first time domain resource in the time domain.

As an embodiment, to obtain the first CQI, the first node assumes that interference measurement on the first reference resource may be obtained from interference measurement on at least one symbol orthogonal with the first time domain resource.

As an embodiment, to obtain the first CQI, the first node assumes that interference measurement on the first reference resource cannot be obtained from interference measurement on symbols in the first time domain resource.

As an embodiment, the first reference resource is related to the first condition.

As an embodiment, the first condition includes that the first transmission occasion overlaps with the first time domain resource in the time domain, and to obtain the first CQI, the first node assumes that interference measurement on the first reference resource may be obtained from interference measurement on at least one symbol in the first time domain resource; or The first condition includes that the first transmission occasion is orthogonal with the first time domain resource in the time domain, and to obtain the first CQI, the first node assumes that interference measurement on the first reference resource cannot be obtained from interference measurement on one symbol in the first time domain resource.

As an embodiment, the first condition includes that the first transmission occasion overlaps with the first time domain resource in the time domain, and to obtain the first CQI, the first node assumes that interference measurement on the first reference resource may only be obtained from interference measurement on at least one symbol in the first time domain resource; or The first condition includes that the first transmission occasion is orthogonal with the first time domain resource in the time domain, and to obtain the first CQI, the first node assumes that interference measurement on the first reference resource may only be obtained from interference measurement on at least one symbol orthogonal with the first time domain resource.

As an embodiment, the first threshold is equal to 0.1.

As an embodiment, the first threshold is equal to 0.00001.

As an embodiment, frequency domain resources to which the first CSI set is related (relate) are used for determining frequency domain resources occupied by the first reference resource.

As an embodiment, the first reference resource is defined as a group of downlink RBs corresponding to a band (band) to which the first CSI set is related in the frequency domain.

As an embodiment, time domain resources occupied by the first CSI set are used for determining time domain resources occupied by the first reference resource.

As an embodiment, the first reference resource is located before time domain resources occupied by the first CSI set in the time domain.

As an embodiment, the first reference resource and the first CSI set occupy one same slot in the time domain.

As an embodiment, the first reference resource and the first CSI set occupy different slots in the time domain.

As an embodiment, the first reference resource is defined by a slot (n-a first offset-a second offset) in the time domain, and the first CSI set occupies a slot n1; and n1 is used for determining n, and both the first offset and the second offset are integers.

As a sub-embodiment of the foregoing embodiment, a downlink subcarrier spacing configuration (subcarrier spacing configuration) and an uplink subcarrier spacing configuration are used for determining n.

As a sub-embodiment of the foregoing embodiment, n is equal to the floor of the product of n1 and a first ratio plus a third offset; the third offset is an integer; and the downlink subcarrier spacing configuration and the uplink subcarrier spacing configuration are used for determining the first ratio.

As a reference embodiment of the foregoing sub-embodiment, the higher layer parameter "ca-SlotOffset" is used for determining the third offset.

As a reference embodiment of the foregoing sub-embodiment, the downlink subcarrier spacing configuration is used for determining the third offset.

As a sub-embodiment of the foregoing embodiment, the first offset is related to the downlink subcarrier spacing configuration.

As a sub-embodiment of the foregoing embodiment, the first reporting configuration is aperiodic, and the first offset enables the first reference resource and a CSI request corresponding to the first CSI set to be within a same valid (valid) downlink slot.

As a sub-embodiment of the foregoing embodiment, the first offset is greater than or equal to a second threshold and enables a slot (n-the first offset) to correspond to a minimum value of one valid downlink slot; and the second threshold is an integer.

As a reference embodiment of the foregoing sub-embodiment, the second threshold is related to the downlink subcarrier spacing configuration.

As a reference embodiment of the foregoing sub-embodiment, the second threshold is related to a delay requirement (delay requirement).

As a sub-embodiment of the foregoing embodiment, the higher layer parameter "CellSpecificKoffset" is used for determining the second offset.

As a sub-embodiment of the foregoing embodiment, a Differential Koffset MAC CE command (command) is used for determining the second offset.

As a sub-embodiment of the foregoing embodiment, the downlink subcarrier spacing configuration is used for determining the second offset.

As an embodiment, the downlink subcarrier spacing configuration is a subcarrier spacing configuration corresponding to the first reference signal resource set.

As an embodiment, the uplink subcarrier spacing configuration is a subcarrier spacing configuration corresponding to the first CSI set.

As an embodiment, the first transmission occasion is any transmission occasion not later than the first reference resource in the time domain of any reference signal associated with the first reference signal resource set.

As an embodiment, the first transmission occasion is any transmission occasion not later than the first reference resource in the time domain of a reference signal transmitted in any reference signal resource in the first reference signal resource set.

As an embodiment, the first transmission occasion belongs to the first transmission occasion set.

As an embodiment, the first transmission occasion does not belong to the first transmission occasion set.

As an embodiment, whether a reference signal in the first transmission occasion that is associated with the first reference signal resource set is used for obtaining channel measurement for calculating the first CSI set depends on whether the first transmission occasion overlaps with the first time domain resource in the time domain.

As an embodiment, whether the first transmission occasion overlaps with the first time domain resource in the time domain is used for determining whether the first transmission occasion belongs to the first transmission occasion set.

As an embodiment, whether the first transmission occasion overlaps with the first time domain resource in the time domain is used by the first node for determining whether the first transmission occasion belongs to the first transmission occasion set.

As an embodiment, whether the first transmission occasion overlaps with the first time domain resource in the time domain is used for determining whether a reference signal in the first transmission occasion that is associated with the first reference signal resource set is used for obtaining channel measurement for calculating the first CSI set.

As an embodiment, whether a reference signal in the first transmission occasion that is associated with the first reference signal resource set is used for obtaining channel measurement for calculating the first CSI set depends on the first condition.

As an embodiment, whether the first condition is met is used for determining whether the first transmission occasion belongs to the first transmission occasion set.

As an embodiment, when the first condition is met, the first transmission occasion belongs to the first transmission occasion set.

As an embodiment, when the first condition is not met, the first transmission occasion does not belong to the first transmission occasion set.

As an embodiment, if and only if the first condition is met, the first transmission occasion belongs to the first transmission occasion set.

As an embodiment, the first condition is met and the first transmission occasion belongs to the first transmission occasion set, or the first condition is not met and the first transmission occasion does not belong to the first transmission occasion set.

As an embodiment, when the first transmission occasion is the most recent (most recent) transmission occasion that meets the first condition and is not later than the first reference resource of a reference signal associated with the first reference signal resource set, the first transmission occasion belongs to the first transmission occasion set.

As an embodiment, if and only if the first transmission occasion is the most recent (most recent) transmission occasion that meets the first condition and is not later than the first reference resource of a reference signal associated with the first reference signal resource set, the first transmission occasion belongs to the first transmission occasion set.

As an embodiment, the first transmission occasion set includes a transmission occasion that meets the first condition and is not later than the first reference resource of a reference signal associated with the first reference signal resource set.

As an embodiment, the first transmission occasion set only includes the most recent (most recent) transmission occasion that meets the first condition and is not later than the first reference resource of a reference signal associated with the first reference signal resource set.

As an embodiment, the first condition includes that the first transmission occasion overlaps with the first time domain resource in the time domain.

As an embodiment, the first condition includes that the first transmission occasion is orthogonal with the first time domain resource in the time domain.

As an embodiment, the first condition includes that all symbols occupied by the first transmission occasion belong to the first time domain resource.

As an embodiment, the first condition includes that the first transmission occasion occupies at least one symbol that does not belong to the first time domain resource.

As an embodiment, when the first transmission occasion overlaps with the first time domain resource in the time domain, the first condition is met.

As an embodiment, when the first transmission occasion occupies at least one symbol that belongs to the first time domain resource, the first condition is met.

As an embodiment, when the first transmission occasion is orthogonal with the first time domain resource in the time domain, the first condition is not met.

As an embodiment, when each symbol occupied by the first transmission occasion belongs to the first time domain resource, the first condition is met.

As an embodiment, when the first transmission occasion occupies at least one symbol that does not belong to the first time domain resource, the first condition is not met.

As an embodiment, whether the first transmission occasion overlaps with the first time domain resource in the time domain means: whether the first transmission occasion belongs to the first time domain resource in the time domain.

As an embodiment, whether the first transmission occasion overlaps with the first time domain resource in the time domain means: whether the first transmission occasion occupies at least one symbol that belongs to the first time domain resource.

As an embodiment, the first time domain resource is used for determining the first transmission occasion set.

As an embodiment, the first transmission occasion set depends on the first time domain resource.

As an embodiment, when the first transmission occasion belongs to the first transmission occasion set, a reference signal in the first transmission occasion that is associated with the first reference signal resource set is used for obtaining channel measurement for calculating the first CSI set.

As an embodiment, when the first transmission occasion does not belong to the first transmission occasion set, a reference signal in the first transmission occasion that is associated with the first reference signal resource set is not used for obtaining channel measurement for calculating the first CSI set.

### Embodiment 2

Embodiment 2 provides a schematic diagram of a network architecture according to an embodiment of this application, as shown in FIG. 2.

FIG. 2 is a diagram of a network architecture 200 of LTE (Long-Term Evolution, Long-Term Evolution), LTE-A (Long-Term Evolution Advanced, Long-Term Evolution Advanced), and future 5G systems. The network architecture 200 of LTE, LTE-A, and future 5G systems may be referred to as an EPS (Evolved Packet System, evolved packet system) 200. The network architecture 200 of 5G NR or LTE may be referred to as a 5GS (5G System)/an EPS (Evolved Packet System, evolved packet system) 200 or another suitable term. The 5GS/EPS 200 may include one or more UEs (User Equipment, user equipment) 201, a UE 241 that performs sidelink (sidelink) communication with the UE 201, an NG-RAN (Next Generation Radio Access Network) 202, a 5GC (5G Core Network, 5G Core Network)/EPC (Evolved Packet Core, Evolved Packet Core) 210, an HSS (Home Subscriber Server, Home Subscriber Server)/UDM (Unified Data Management, Unified Data Management) 220, and an Internet service 230. The 5GS/EPS 200 may interconnect with other access networks, but these entities/interfaces are not shown for simplicity. As shown in FIG. 2, the 5GS/EPS 200 provides a packet-switched service. However, persons skilled in the art will easily understand that various concepts presented throughout this application may be extended to a network providing a circuit-switched service. The NG-RAN 202 includes an NR (New Radio, New Radio) node B 203 and another gNB 204. The gNB 203 provides termination of user plane and control plane protocols toward UE 201. The gNB 203 may be connected to another gNB 204 through an Xn interface (for example, a backhaul). The gNB 203 may be alternatively referred to as a base station, a base transceiver station, a radio base station, a radio transceiver, a transceiver function, a basic service set (BSS), an extended service set (ESS), a TRP (transmission reception point), or another suitable term. The gNB 203 provides an access point to the 5GC/EPC 210 for the UE 201. An example of the UE 201 includes a cellular phone, a smart phone, a session initiation protocol (SIP) phone, a laptop computer, a personal digital assistant (PDA), a satellite radio, a global positioning system, a multimedia apparatus, a video apparatus, a digital audio player (for example, an MP3 player), a camera, a game console, an unmanned aerial vehicle, an aircraft, a narrow band Internet of Things device, a machine type communication device, a land vehicle, an automobile, a wearable device, or any other apparatus with similar functions. Persons skilled in the art may alternatively refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a mobile phone, a user agent, a mobile client, a client, or another suitable term. The gNB 203 is connected to the 5GC/EPC 210 by an S1/NG interface. The 5GC/EPC 210 includes an MME (Mobility Management Entity, Mobility Management Entity)/AMF (Authentication Management Field, Authentication Management Field)/SMF (Session Management Function, Session Management Function) 211, another MME/AMF/SMF 214, an S-GW (Service Gateway, Service Gateway)/a UPF (User Plane Function, User Plane Function) 212, and a P-GW (packet data network gateway, packet data network gateway)/UPF 213. The MME/AMF/SMF 211 is a control node that processes signaling between the UE 201 and the 5GC/EPC 210. Generally, the MME/AMF/SMF 211 provides bearer and connection management. All user IP (Internet Protocol, Internet Protocol) packets are delivered by using the S-GW/UPF 212, and the S-GW/UPF 212 is connected to the P-GW/UPF 213. The P-GW provides UE IP address allocation and other functions. The P-GW/UPF 213 is connected to the Internet service 230. The Internet service 230 includes an Internet Protocol service corresponding to an operator, and may specifically include the Internet, an intranet, an IMS (IP Multimedia Subsystem, IP Multimedia Subsystem), and a packet-switched service.

As an embodiment, the first node in this application includes the UE 201.

As an embodiment, the second node in this application includes the gNB 203.

As an embodiment, a radio link between the UE 201 and the gNB 203 includes a cellular network link.

As an embodiment, a transmitter of the first information block includes the gNB 203.

As an embodiment, a receiver of the first information block includes the UE 201.

As an embodiment, a transmitter of the first reporting configuration includes the gNB 203.

As an embodiment, a receiver of the first reporting configuration includes the UE 201.

As an embodiment, a transmitter of the first CSI set includes the UE 201.

As an embodiment, a receiver of the first CSI set includes the gNB 203.

As an embodiment, the gNB 203 supports a more flexible duplex mode or full duplex mode.

As an embodiment, the UE 201 supports a more flexible duplex mode or full duplex mode.

As an embodiment, the full duplex mode includes Subband non-overlapping Full Duplex (Subband non-overlapping Full Duplex).

As an embodiment, the full duplex mode includes Subband Full Duplex (Subband Full Duplex).

### Embodiment 3

Embodiment 3 provides a schematic diagram of an embodiment of a radio protocol architecture of a user plane and a control plane according to an embodiment of this application, as shown in FIG. 3.

Embodiment 3 provides a schematic diagram of an embodiment of a radio protocol architecture of a user plane and a control plane according to this application, as shown in FIG. 3. FIG. 3 is a schematic diagram of an embodiment of a radio protocol architecture used for a user plane 350 and a control plane 300. FIG. 3 shows, by using three layers, namely, Layer 1, Layer 2, and Layer 3, a radio protocol architecture used for the control plane 300 between a first communication node device (a UE, a gNB, or an RSU in V2X) and a second communication node device (a gNB, a UE, or an RSU in V2X) or between two UEs. Layer 1 (an L1 layer) is the lowest layer and implements various PHY (physical layer) signal processing functions. An L1 layer is referred to as a PHY 301 in this specification. Layer 2 (an L2 layer) 305 is above the PHY 301, and is responsible for links between the first communication node device and the second communication node device and between the two UEs. An L2 layer 305 includes a MAC (Media Access Control, Media Access Control) sublayer 302, an RLC (Radio Link Control, Radio Link Control) sublayer 303, and a PDCP (Packet Data Convergence Protocol, Packet Data Convergence Protocol) sublayer 304. These sublayers terminate at the second communication node device. The PDCP sublayer 304 provides multiplexing between different radio bearers and logical channels. The PDCP sublayer 304 further provides security by encrypting a data packet, and provides handover support for the first communication node device between second communication node devices. The RLC sublayer 303 provides segmentation and reassembly of an upper-layer data packet, retransmission of a lost data packet, and reordering of data packets to compensate for out-of-order reception caused by HARQ. The MAC sublayer 302 provides multiplexing between logic channels and transport channels. The MAC sublayer 302 is further responsible for allocating various radio resources (for example, resource blocks) in a cell between first communication node devices. The MAC sublayer 302 is further responsible for HARQ operations. An RRC (Radio Resource Control, Radio Resource Control) sublayer 306 in Layer 3 (an L3 layer) in the control plane 300 is responsible for obtaining radio resources (i.e., radio bearers) and configuring a lower layer by using RRC signaling between the second communication node device and the first communication node device. A radio protocol architecture of the user plane 350 includes Layer 1 (an L1 layer) and Layer 2 (an L2 layer). For a radio protocol architecture used for the first communication node device and the second communication node device in the user plane 350, a physical layer 351, a PDCP sublayer 354 in an L2 layer 355, an RLC sublayer 353 in the L2 layer 355, and a MAC sublayer 352 in the L2 layer 355 are substantially the same as corresponding layers and sublayers in the control plane 300. However, the PDCP sublayer 354 further provides header compression for an upper-layer data packet to reduce radio transmission overhead. The L2 layer 355 in the user plane 350 further includes an SDAP (Service Data Adaptation Protocol, Service Data Adaptation Protocol) sublayer 356. The SDAP sublayer 356 is responsible for mapping between a QoS flow and a data radio bearer (DRB, Data Radio Bearer), to support diversity of services. Although not shown in the figure, the first communication node device may have several upper layers above the L2 layer 355, including a network layer (for example, an IP layer) that terminates at a P-GW on a network side and an application layer that terminates at another end (for example, a remote UE or a server) of a connection.

As an embodiment, the radio protocol architecture in FIG. 3 is applicable to the first node in this application.

As an embodiment, the radio protocol architecture in FIG. 3 is applicable to the second node in this application.

As an embodiment, the first information block is generated in the RRC sublayer 306.

As an embodiment, the first information block is generated in the MAC sublayer 302 or the MAC sublayer 352.

As an embodiment, the first information block is generated in the PHY 301 or the PHY 351.

As an embodiment, a part of the first information block is generated in the RRC sublayer 306, and another part is generated in the PHY 301 or the PHY 351.

As an embodiment, a part of the first information block is generated in the RRC sublayer 306, and another part is generated in the MAC sublayer 302 or the MAC sublayer 352.

As an embodiment, a part of the first information block is generated in the MAC sublayer 302 or the MAC sublayer 352, and another part is generated in the PHY 301 or the PHY 351.

As an embodiment, the first reporting configuration is generated in the RRC sublayer 306.

As an embodiment, the first CSI set is generated in the PHY 301 or the PHY 351.

As an embodiment, the higher layer in this application means a layer above the physical layer.

### Embodiment 4

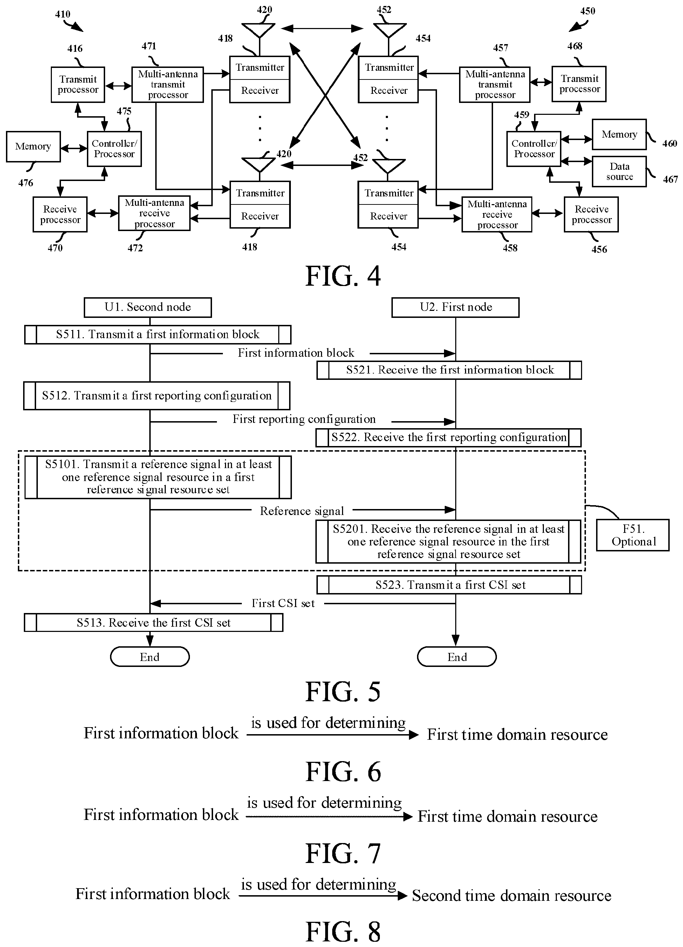

Embodiment 4 provides a schematic diagram of a first communication device and a second communication device according to an embodiment of this application, as shown in FIG. 4. FIG. 4 is a block diagram of a first communication device 410 and a second communication device 450 communicating with each other in an access network.

The first communication device 410 includes a controller/processor 475, a memory 476, a receive processor 470, a transmit processor 416, a multi-antenna receive processor 472, a multi-antenna transmit processor 471, a transmitter/receiver 418, and an antenna 420.

The second communication device 450 includes a controller/processor 459, a memory 460, a data source 467, a transmit processor 468, a receive processor 456, a multi-antenna transmit processor 457, a multi-antenna receive processor 458, a transmitter/receiver 454, and an antenna 452.

During transmission from the first communication device 410 to the second communication device 450, at the first communication device 410, an upper-layer data packet from a core network is provided to the controller/processor 475. The controller/processor 475 implements the functionality of the L2 layer. In DL, the controller/processor 475 provides header compression, encryption, packet segmentation and reordering, multiplexing between logical channels and transport channels, and radio resource allocation to the second communication device 450 based on various priority measures. The controller/processor 475 is further responsible for HARQ operations, retransmission of a lost packet, and signaling to the second communication device 450. The transmit processor 416 and the multi-antenna transmit processor 471 implement various signal processing functions for the L1 layer (i.e., the physical layer). The transmit processor 416 implements coding and interleaving to promote forward error correction (FEC) at the second communication device 450, and constellation mapping based on various modulation schemes (for example, binary phase shift keying (BPSK), orthogonal phase shift keying (QPSK), M-phase shift keying (M-PSK), and M-orthogonal amplitude modulation (M-QAM)). The multi-antenna transmit processor 471 performs digital space precoding on coded and modulated symbols, including codebook-based precoding and non-codebook-based precoding, and beam forming processing, to generate one or more parallel streams. Then, the transmit processor 416 maps each parallel stream to a subcarrier, multiplexes the modulated symbol with a reference signal (for example, a pilot) in a time domain and/or a frequency domain, and then uses an inverse fast Fourier transform (IFFT) to generate a physical channel carrying a time domain multi-carrier symbol stream. Subsequently, the multi-antenna transmit processor 471 transmits an analog precoding/beam forming operation on the time domain multi-carrier symbol stream. Each transmitter 418 converts a baseband multi-carrier symbol stream provided by the multi-antenna transmit processor 471 into a radio frequency stream, and then provides the radio frequency stream to different antennas 420.

During transmission from the first communication device 410 to the second communication device 450, at the second communication device 450, each receiver 454 receives a signal by using a corresponding antenna 452 thereof. Each receiver 454 recovers information modulated onto a radio frequency carrier, converts the radio frequency stream into the baseband multi-carrier symbol stream, and provides the baseband multi-carrier symbol stream to the receive processor 456. The receive processor 456 and the multi-antenna receive processor 458 implement various signal processing functions of the L1 layer. The multi-antenna receive processor 458 receives the analog precoding/beam forming operation on the baseband multi-carrier symbol stream from the receiver 454. The receive processor 456 converts, by using a fast Fourier transform (FFT), the baseband multi-carrier symbol stream on which the analog precoding/beam forming operation is received from a time domain to a frequency domain. In the frequency domain, a data signal and a reference signal of the physical layer are demultiplexed by the receive processor 456, the reference signal is used for channel estimation, and after multi-antenna detection is performed on the data signal in the multi-antenna receive processor 458, any parallel stream with the second communication device 450 as a destination is recovered. Symbols in each parallel stream are demodulated and recovered in the receive processor 456, and a soft decision is generated. Subsequently, the receive processor 456 decodes and deinterleaves the soft decision to recover upper-layer data and a control signal that are transmitted by the first communication device 410 on the physical channel. Subsequently, the upper-layer data and the control signal are provided to the controller/processor 459. The controller/processor 459 implements the functions of the L2 layer. The controller/processor 459 may be associated with the memory 460 that stores program code and data. The memory 460 may be referred to as a computer-readable medium. In DL, the controller/processor 459 provides demultiplexing, packet reassembly, decryption, header decompression, and control signal processing between transport channels and logical channels to recover the upper-layer data packet from the core network. Subsequently, the upper-layer data packet is provided to all protocol layers above the L2 layer. Various control signals may also be provided to L3 for processing of L3. The controller/processor 459 is further responsible for performing error detection by using an acknowledgment (ACK) and/or negative acknowledgment (NACK) protocol to support HARQ operations.

During transmission from the second communication device 450 to the first communication device 410, at the second communication device 450, the data source 467 is used to provide the upper-layer data packet to the controller/processor 459. The data source 467 indicates all protocol layers above the L2 layer. Similar to a transmission function described for the first communication device 410 in DL, the controller/processor 459 implements header compression and encryption, packet segmentation and reordering, multiplexing between logical channels and transport channels, and implements the functions of the L2 layer for a user plane and a control plane based on radio resource allocation of the first communication device 410. The controller/processor 459 is further responsible for HARQ operations, retransmission of a lost packet and signaling to the first communication device 410. The transmit processor 468 performs modulation mapping and channel coding. The multi-antenna transmit processor 457 performs digital multi-antenna space precoding, including codebook-based precoding and non-codebook-based precoding, and beam forming. Subsequently, the transmit processor 468 modulates a generated parallel stream into a multi-carrier/single-carrier symbol stream. After performing an analog precoding/beam forming operation in the multi-antenna transmit processor 457, the multi-carrier/single-carrier symbol stream is provided to the different antennas 452 by using the transmitter 454. Each transmitter 454 first converts a baseband symbol stream provided by the multi-antenna transmit processor 457 into a radio frequency symbol stream, and then provides the radio frequency symbol stream to the antenna 452.

During transmission from the second communication device 450 to the first communication device 410, the function of the first communication device 410 is similar to a receiving function of the second communication device 450 described during transmission from the first communication device 410 to the second communication device 450. Each receiver 418 receives a radio frequency signal by using a corresponding antenna 420 thereof, converts the received radio frequency signal into a baseband signal, and provides the baseband signal to the multi-antenna receive processor 472 and the receive processor 470. The receive processor 470 and the multi-antenna receive processor 472 jointly implement the functions of the L1 layer. The controller/processor 475 implements the functions of the L2 layer. The controller/processor 475 may be associated with the memory 476 that stores program code and data. The memory 476 may be referred to as a computer-readable medium. The controller/processor 475 provides demultiplexing, packet reassembly, decryption, header decompression, and control signal processing between transport channels and logical channels to recover the upper-layer data packet from the second communication device 450. The upper-layer data packet from the controller/processor 475 may be provided to the core network. The controller/processor 475 is further responsible for performing error detection by using an ACK and/or a NACK protocol to support HARQ operations.

As an embodiment, the second communication device 450 includes at least one processor and at least one memory, the at least one memory including computer program code; and the at least one memory and the computer program code being configured to be used together with the at least one processor. The second communication device 450 at least receives the first information block and the first reporting configuration; and transmits the first CSI set. The first information block is used for determining a first time domain resource, and the first reporting configuration is used for determining a first reference signal resource set. The first reporting configuration is applied to the first CSI set; only a reference signal in a first transmission occasion set that is associated with the first reference signal resource set is used for obtaining channel measurement for calculating the first CSI set; the first time domain resource includes at least one symbol; a first transmission occasion is one transmission occasion for a reference signal associated with the first reference signal resource set, the first transmission occasion is not later than a first reference resource in a time domain, and the first reference resource is a CSI reference resource of the first CSI set; and whether the first transmission occasion belongs to the first transmission occasion set depends on whether a first condition is met, and the first condition is related to whether the first transmission occasion overlaps with the first time domain resource in the time domain.

As an embodiment, the second communication device 450 includes a memory storing a computer-readable instruction program, the computer-readable instruction program generating actions when being executed by at least one processor, and the actions including: receiving the first information block and the first reporting configuration; and transmitting the first CSI set.

As an embodiment, the first communication device 410 includes at least one processor and at least one memory, the at least one memory including computer program code; and the at least one memory and the computer program code being configured to be used together with the at least one processor. The first communication device 410 at least transmits the first information block and the first reporting configuration; and receives the first CSI set. The first information block is used for determining a first time domain resource, and the first reporting configuration is used for determining a first reference signal resource set. The first reporting configuration is applied to the first CSI set; only a reference signal in a first transmission occasion set that is associated with the first reference signal resource set is used for obtaining channel measurement for calculating the first CSI set; the first time domain resource includes at least one symbol; a first transmission occasion is one transmission occasion for a reference signal associated with the first reference signal resource set, the first transmission occasion is not later than a first reference resource in a time domain, and the first reference resource is a CSI reference resource of the first CSI set; and whether the first transmission occasion belongs to the first transmission occasion set depends on whether a first condition is met, and the first condition is related to whether the first transmission occasion overlaps with the first time domain resource in the time domain.

As an embodiment, the first communication device 410 includes a memory storing a computer-readable instruction program, the computer-readable instruction program generating actions when being executed by at least one processor, and the actions including: transmitting the first information block and the first reporting configuration; and receiving the first CSI set.

As an embodiment, the first node in this application includes the second communication device 450.

As an embodiment, the second node in this application includes the first communication device 410.

As an embodiment, at least one of the antenna 452, the receiver 454, the receive processor 456, the multi-antenna receive processor 458, the controller/processor 459, the memory 460, and the data source 467 is configured to receive the first information block. At least one of the antenna 420, the transmitter 418, the transmit processor 416, the multi-antenna transmit processor 471, the controller/processor 475, and the memory 476 is configured to transmit the first information block.

As an embodiment, at least one of the antenna 452, the receiver 454, the receive processor 456, the multi-antenna receive processor 458, the controller/processor 459, the memory 460, and the data source 467 is configured to receive the first reporting configuration. At least one of the antenna 420, the transmitter 418, the transmit processor 416, the multi-antenna transmit processor 471, the controller/processor 475, and the memory 476 is configured to transmit the first reporting configuration.

As an embodiment, at least one of the antenna 420, the receiver 418, the receive processor 470, the multi-antenna receive processor 472, the controller/processor 475, the memory 476 is configured to receive the first CSI set. At least one of the antenna 452, the transmitter 454, the transmit processor 468, the multi-antenna transmit processor 457, the controller/processor 459, the memory 460, and the data source 467 is configured to transmit the first CSI set.

### Embodiment 5

Embodiment 5 provides a flowchart of transmission between a first node and a second node according to an embodiment of this application, as shown in FIG. 5. In FIG. 5, a second node U1 and a first node U2 are communication nodes that perform transmission by using an air interface. In FIG. 5, the step in the box F51 is optional.

The second node U1 transmits a first information block in Step S511, transmits a first reporting configuration in Step S512, transmits a reference signal in at least one reference signal resource in a first reference signal resource set in Step S5101, and receives a first CSI set in Step S513.

The first node U2 receives the first information block in Step S521, receives the first reporting configuration in Step S522, receives the reference signal in at least one reference signal resource in the first reference signal resource set in Step S5201, and transmits the first CSI set in Step S523.

In Embodiment 5, the first information block is used by the first node U2 for determining a first time domain resource, and the first reporting configuration is used by the first node U2 for determining a first reference signal resource set. The first reporting configuration is applied to the first CSI set; only a reference signal in a first transmission occasion set that is associated with the first reference signal resource set is used by the first node U2 for obtaining channel measurement for calculating the first CSI set; the first time domain resource includes at least one symbol; a first transmission occasion is one transmission occasion for a reference signal associated with the first reference signal resource set, the first transmission occasion is not later than a first reference resource in a time domain, and the first reference resource is a CSI reference resource of the first CSI set; and whether the first transmission occasion belongs to the first transmission occasion set depends on whether a first condition is met, and the first condition is related to whether the first transmission occasion overlaps with the first time domain resource in the time domain.

As an embodiment, the first node U2 is the first node in this application.

As an embodiment, the second node U1 is the second node in this application.

As an embodiment, the air interface between the second node U1 and the first node U2 includes a wireless interface between a base station device and a user equipment.

As an embodiment, the air interface between the second node U1 and the first node U2 includes a wireless interface between a relay node device and a user equipment.

As an embodiment, the air interface between the second node U1 and the first node U2 includes a wireless interface between a user equipment and a user equipment.

As an embodiment, the second node U1 is a serving cell maintenance base station of the first node U2.

As an embodiment, the first information block is transmitted in a PDSCH (Physical Downlink Shared Channel, Physical Downlink Shared Channel).

As an embodiment, the first reporting configuration is transmitted in a PDSCH.

As an embodiment, the first CSI set is transmitted in a PUSCH (Physical Uplink Shared Channel, Physical Uplink Shared Channel).

As an embodiment, the first CSI set is transmitted in a PUCCH.

As an embodiment, the step in the box F51 in FIG. 5 exists, and the method in a first node for wireless communication includes: receiving the reference signal in at least one reference signal resource in the first reference signal resource set.

As an embodiment, the step in the box F51 in FIG. 5 exists, and the method in a second node for wireless communication includes: transmitting the reference signal in at least one reference signal resource in the first reference signal resource set.

### Embodiment 6

Embodiment 6 provides a schematic diagram of a first information block being used for determining a first time domain resource according to an embodiment of this application, as shown in FIG. 6. In Embodiment 6, the first information block configures symbols in the first time domain resource as a first type.

As an embodiment, the first information block configures symbols in the first time domain resource as the first type in a cell in which the first reference signal resource set is located.

As an embodiment, the first information block configures symbols in the first time domain resource as the first type in a BWP in which the first reference signal resource set is located.

As an embodiment, the first information block configures symbols in the first time domain resource as the first type in a BWP in which the first CSI set is located.

As an embodiment, the first information block configures each symbol in the first time domain resource as the first type.

As an embodiment, the first information block configures at least one symbol in the first time domain resource as the first type.

As an embodiment, the first information block configures a type of symbols in the first time domain resource as the first type.

As an embodiment, the meaning of the sentence "a first information block being used for determining a first time domain resource" includes: the first information block configures symbols in the first time domain resource as the first type.

As an embodiment, if one symbol is configured as the first type, the symbol is used in a full duplex mode.

As an embodiment, if one symbol is configured as the first type, a transmitter of the first information block simultaneously receives and transmits radio signals in one symbol.

As an embodiment, if one symbol is configured as the first type, a transmitter of the first information block may simultaneously receive and transmit radio signals in one symbol.

As an embodiment, if one symbol is configured as the first type, the symbol is simultaneously used for uplink and downlink.

As an embodiment, if one symbol is not configured as the first type, the symbol is not used in a full duplex mode.

As an embodiment, if one symbol is not configured as the first type, a transmitter of the first information block only receives a radio signal or only transmits a radio signal in one symbol.

As an embodiment, if one symbol is not configured as the first type, the symbol is only used for uplink or is only used for downlink.

As an embodiment, the first type is one type in a first type set, any symbol is configured as one type in the first type set, and the first type set includes the first type, uplink, and downlink.

As a sub-embodiment of the foregoing embodiment, the first type set further includes flexible (flexible).

As an embodiment, the first type is different from uplink and downlink.

As an embodiment, the first type is different from uplink, downlink, and flexible.

### Embodiment 7

Embodiment 7 provides a schematic diagram of a first information block being used for determining a first time domain resource according to an embodiment of this application, as shown in FIG. 7. In Embodiment 7, the first information block indicates that symbols in the first time domain resource are used for uplink in a first frequency domain resource and are used for downlink in a third frequency domain resource; and the first frequency domain resource and the third frequency domain resource are orthogonal with each other in a frequency domain.

As an embodiment, the first information block configures symbols in the first time domain resource as uplink in a first frequency domain resource.

As an embodiment, the first information block configures symbols in the first time domain resource as uplink in a first frequency domain resource and as downlink in a third frequency domain resource.

As an embodiment, the first frequency domain resource and the third frequency domain resource belong to one same BWP.

As an embodiment, the first information block indicates that any symbol in the first time domain resource is used for uplink in a first frequency domain resource and is used for downlink in a third frequency domain resource.

As an embodiment, the first information block indicates that at least one symbol in the first time domain resource is used for uplink in a first frequency domain resource and is used for downlink in a third frequency domain resource.

As an embodiment, the first frequency domain resource includes a plurality of RBs (Resource Block, Resource Block).

As an embodiment, the first frequency domain resource includes a plurality of RBs that are contiguous.

As an embodiment, the first frequency domain resource includes a plurality of RBs that are not contiguous.

As an embodiment, the first information block indicates the first frequency domain resource.

As an embodiment, the first information block indicates a starting RB of the first frequency domain resource and the number of RBs included in the first frequency domain resource.

As an embodiment, the third frequency domain resource includes a plurality of RBs.

As an embodiment, the third frequency domain resource includes a plurality of RBs that are contiguous.

As an embodiment, the third frequency domain resource includes a plurality of RBs that are not contiguous.

As an embodiment, the first information block indicates the third frequency domain resource.

As an embodiment, the first information block indicates a starting RB of the third frequency domain resource and the number of RBs included in the third frequency domain resource.

As an embodiment, the first information block indicates at least one guard band (guard band).

As an embodiment, the first information block indicates a starting RB of and the number of RBs included in each guard band in the at least one guard band.

As an embodiment, the first frequency domain resource is formed by all RBs in a first BWP that do not belong to the third frequency domain resource.

As an embodiment, the first frequency domain resource is formed by all RBs in a first BWP that do not belong to the third frequency domain resource and the at least one guard band (guard band).

As an embodiment, the third frequency domain resource is formed by all RBs in a first BWP that do not belong to the first frequency domain resource.

As an embodiment, the third frequency domain resource is formed by all RBs in a first BWP that do not belong to the first frequency domain resource and the at least one guard band (guard band).

As an embodiment, the first BWP is a BWP in which the first reference signal resource set is located.

As an embodiment, the first BWP is an uplink BWP linked with (linked with) a BWP in which the first reference signal resource set is located.

As an embodiment, the first BWP is an uplink BWP having the same BWP-Id as a BWP in which the first reference signal resource set is located.

As an embodiment, the first information block implicitly indicates the third frequency domain resource by indicating the first frequency domain resource.

As an embodiment, the first information block implicitly indicates the third frequency domain resource by indicating the first frequency domain resource and the at least one guard band.

As an embodiment, the first information block implicitly indicates the first frequency domain resource by indicating the third frequency domain resource.

As an embodiment, the first information block implicitly indicates the first frequency domain resource by indicating the third frequency domain resource and the at least one guard band.

As an embodiment, the first information block implicitly indicates the first frequency domain resource by indicating the at least one guard band.

As an embodiment, the first information block implicitly indicates the third frequency domain resource by indicating the at least one guard band.

As an embodiment, the RB in this application includes a PRB (Physical resource block).

As an embodiment, the RB in this application means a PRB.

As an embodiment, the RB in this application includes 12 contiguous subcarriers (subcarriers) in the frequency domain.

As an embodiment, for one reference signal resource in the first reference signal resource set, the first frequency domain resource includes an RB of at least one RB that the reference signal resource spans across.

As an embodiment, for one reference signal resource in the first reference signal resource set, the third frequency domain resource includes an RB of at least one RB that the reference signal resource spans across.

As an embodiment, for any reference signal resource in the first reference signal resource set, the first frequency domain resource includes an RB of at least one RB that the any reference signal resource spans across.

As an embodiment, for any reference signal resource in the first reference signal resource set, the third frequency domain resource includes an RB of at least one RB that the any reference signal resource spans across.

### Embodiment 8

Embodiment 8 provides a schematic diagram of a first information block being used for determining a second time domain resource according to an embodiment of this application, as shown in FIG. 8. In Embodiment 8, the first information block is used for determining a second time domain resource, and the second time domain resource includes at least one symbol; and the second time domain resource and the first time domain resource are orthogonal with each other.

As an embodiment, the second time domain resource includes a plurality of symbols that are contiguous.

As an embodiment, the second time domain resource includes a plurality of symbols that are not contiguous.

As an embodiment, the second time domain resource includes at least one slot.

As an embodiment, a transmitter of the first information block only transmits a radio signal in the second time domain resource.

As an embodiment, a transmitter of the first information block only transmits a radio signal in any symbol in the second time domain resource.

As an embodiment, a transmitter of the first information block only transmits radio signals in at least one symbol in the second time domain resource.

As an embodiment, a transmitter of the first information block only transmits a radio signal in any symbol in the second time domain resource in a cell in which the first reference signal resource set is located.

As an embodiment, the second time domain resource includes symbols that are only used for downlink.

As an embodiment, any symbol in the second time domain resource is only used for downlink.

As an embodiment, any symbol in the second time domain resource is only used for downlink in a cell in which the first reference signal resource set is located.

As an embodiment, any symbol in the second time domain resource is only used for downlink in a third BWP.

As an embodiment, any symbol in the second time domain resource is only used for downlink in all RBs included in the third BWP.

As an embodiment, any symbol in the second time domain resource is only used for downlink transmission in all RBs that are included in the third BWP and are outside a guard band.

As an embodiment, symbols in the second time domain resource are configured as downlink (downlink).

As an embodiment, symbols in the second time domain resource are configured as downlink in both the first frequency domain resource and the third frequency domain resource.

As an embodiment, at least one symbol in the second time domain resource is configured as downlink in both the first frequency domain resource and the third frequency domain resource.

As an embodiment, each symbol in the second time domain resource is configured as downlink in both the first frequency domain resource and the third frequency domain resource.

As an embodiment, symbols in the second time domain resource are configured as downlink in a third BWP.

As an embodiment, symbols in the second time domain resource are configured as downlink in all RBs included in the third BWP.

As an embodiment, symbols in the second time domain resource are configured as downlink in all RBs that are included in the third BWP and are outside a guard band.

As an embodiment, each symbol in the second time domain resource is configured as downlink in a third BWP.

As an embodiment, each symbol in the second time domain resource is configured as downlink in all RBs included in the third BWP.

As an embodiment, each symbol in the second time domain resource is configured as downlink in all RBs that are included in the third BWP and are outside a guard band.

As an embodiment, at least one symbol in the second time domain resource is configured as downlink in a third BWP.

As an embodiment, at least one symbol in the second time domain resource is configured as downlink in all RBs included in the third BWP.

As an embodiment, at least one symbol in the second time domain resource is configured as downlink in all RBs that are included in the third BWP and are outside a guard band.

As an embodiment, the third BWP is a BWP in which the first reference signal resource set is located.

As an embodiment, the third BWP is the first BWP.

As an embodiment, the third BWP is different from the first BWP.

As an embodiment, the first time domain resource includes symbols that do not belong to the second time domain resource.

As an embodiment, the first time domain resource is formed by symbols that do not belong to the second time domain resource.

As an embodiment, the second time domain resource includes symbols that do not belong to the first time domain resource.

As an embodiment, the second time domain resource is formed by symbols that do not belong to the first time domain resource.

As an embodiment, the first information block indicates the second time domain resource.

As an embodiment, the first information block implicitly indicates the first time domain resource by indicating the second time domain resource.

As an embodiment, the first time domain resource includes symbols in first type symbols that do not belong to the second time domain resource.

As an embodiment, the first time domain resource is formed by symbols in first type symbols that do not belong to the second time domain resource.

As an embodiment, the first time domain resource includes all symbols in first type symbols that do not belong to the second time domain resource.

As an embodiment, the first information block implicitly indicates the second time domain resource by indicating the first time domain resource.

As an embodiment, the second time domain resource includes symbols in first type symbols that do not belong to the first time domain resource.

As an embodiment, the second time domain resource is formed by symbols in first type symbols that do not belong to the first time domain resource.

As an embodiment, the second time domain resource includes all symbols in first type symbols that do not belong to the first time domain resource.

As an embodiment, the first type symbols include symbols that are configured by a third information block as downlink (downlink).

As an embodiment, the first type symbols include symbols that are configured by a third information block as downlink and symbols that are configured by the third information block as flexible.

As an embodiment, the first type symbols are formed by symbols that are configured by a third information block as downlink (downlink).

As an embodiment, the first type symbols are formed by symbols that are configured by a third information block as downlink and symbols that are configured by the third information block as flexible.

As an embodiment, the third information block is carried by higher layer (higher layer) signaling.

As an embodiment, the third information block includes information in some or all fields in at least one RRC IE.

As an embodiment, the third information block includes information carried by a higher layer parameter "tdd-UL-DL-ConfigurationCommon".

As an embodiment, the third information block includes information in some or all fields in a ServingCellConfigCommon IE.

As an embodiment, the third information block includes information in a field "tdd-UL-DL-ConfigurationCommon" in a ServingCellConfigCommon IE.

As an embodiment, the third information block includes information in some or all fields in a ServingCellConfigCommonSIB IE.

As an embodiment, the third information block includes information in a field "tdd-UL-DL-ConfigurationCommon" in a ServingCellConfigCommonSIB IE.

As an embodiment, the third information block includes information in a TDD-UL-DL-ConfigCommon IE.

As an embodiment, the third information block includes information carried by a higher layer parameter "tdd-UL-DL-ConfigurationDedicated".

As an embodiment, the third information block includes information in some or all fields in a ServingCellConfig IE.

As an embodiment, the third information block includes information in a field "tdd-UL-DL-ConfigurationDedicated" in a ServingCellConfig IE.

As an embodiment, the third information block includes information in DCI.

As an embodiment, the third information block includes information in all or some fields in DCI format 2_0.

As an embodiment, the third information block is carried jointly by higher layer signaling and DCI.

As an embodiment, the third information block includes information in at least one RRC IE and information in at least one DCI.

### Embodiment 9

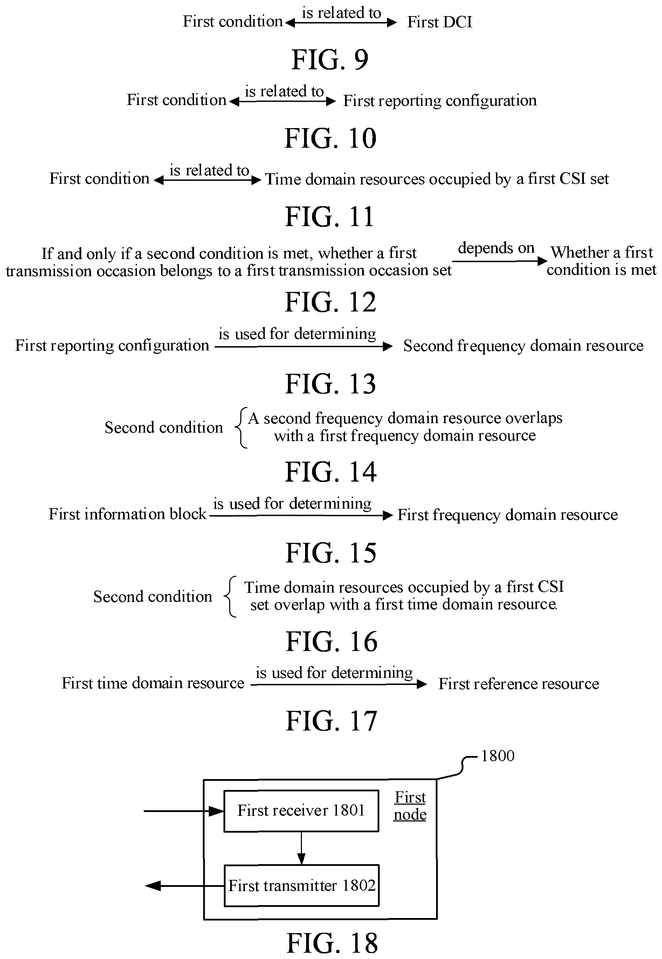

Embodiment 9 provides a schematic diagram of a first condition according to an embodiment of this application, as shown in FIG. 9. In Embodiment 9, the first DCI is used for triggering the first CSI set, and the first condition is related to the first DCI.

As an embodiment, the first DCI indicates a trigger state (trigger state) of the first reporting configuration.

As an embodiment, the trigger state of the first reporting configuration is configured by using RRC signaling.

As an embodiment, the trigger state of the first reporting configuration is configured by using a CSI-AperiodicTriggerStateList IE.

As an embodiment, a DCI field "CSI request" of the first DCI is used for triggering the first CSI set.

As an embodiment, a DCI field "CSI request" of the first DCI indicates the trigger state of the first reporting configuration.

As an embodiment, whether the first condition includes that the first transmission occasion overlaps with the first time domain resource in the time domain or includes that the first transmission occasion is orthogonal with the first time domain resource in the time domain is related to the first DCI.

As an embodiment, the first DCI is used for determining the first condition.

As an embodiment, the first condition depends on the first DCI.

As an embodiment, time-frequency resources occupied by the first DCI are used for determining the first condition.

As an embodiment, time domain resources occupied by the first DCI are used for determining the first condition.

As an embodiment, the first condition depends on time-frequency resources occupied by the first DCI.

As an embodiment, when the time domain resources occupied by the first DCI overlap with the first time domain resource, the first condition includes that the first transmission occasion overlaps with the first time domain resource in the time domain.

As an embodiment, when the time domain resources occupied by the first DCI overlap with the first time domain resource, the first condition includes that all symbols occupied by the first transmission occasion belong to the first time domain resource.

As an embodiment, when the time domain resources occupied by the first DCI are orthogonal with the first time domain resource, the first condition includes that the first transmission occasion is orthogonal with the first time domain resource in the time domain.

As an embodiment, when the time domain resources occupied by the first DCI are orthogonal with the first time domain resource, the first condition includes that the first transmission occasion occupies at least one symbol that does not belong to the first time domain resource.

As an embodiment, the first DCI indicates the first condition.

As an embodiment, the first DCI implicitly indicates the first condition by indicating other information.

As an embodiment, the first DCI explicitly indicates the first condition.

As an embodiment, the first DCI includes a first DCI field, and the first DCI field indicates the first condition.

As a sub-embodiment of the foregoing embodiment, when a value of the first DCI field in the first DCI is equal to a first candidate value, the first condition includes that the first transmission occasion overlaps with the first time domain resource in the time domain.

As a sub-embodiment of the foregoing embodiment, when a value of the first DCI field in the first DCI is equal to a first candidate value, the first condition includes that all symbols occupied by the first transmission occasion belong to the first time domain resource.

As a sub-embodiment of the foregoing embodiment, when a value of the first DCI field in the first DCI is equal to a second candidate value, the first condition includes that the first transmission occasion is orthogonal with the first time domain resource in the time domain.

As a sub-embodiment of the foregoing embodiment, when a value of the first DCI field in the first DCI is equal to a second candidate value, the first condition includes that the first transmission occasion occupies at least one symbol that does not belong to the first time domain resource.

As an embodiment, a CORESET to which the first DCI belongs is used for determining the first condition.

As an embodiment, a search space set (search space set) to which the first DCI belongs is used for determining the first condition.

As an embodiment, an RNTI (Radio Network Temporary Identifier, Radio Network Temporary Identifier) used for scrambling (Scramble) the CRC (Cyclic Redundancy Check, Cyclic Redundancy Check) of the first DCI is used for determining the first condition.

As an embodiment, the DCI format of the first DCI is used for determining the first condition.

### Embodiment 10

Embodiment 10 provides a schematic diagram of a first condition according to an embodiment of this application, as shown in FIG. 10. In Embodiment 10, the first condition is related to the first reporting configuration.

As an embodiment, whether the first condition includes that the first transmission occasion overlaps with the first time domain resource in the time domain or includes that the first transmission occasion is orthogonal with the first time domain resource in the time domain is related to the first reporting configuration.

As an embodiment, the first reporting configuration is used for determining the first condition.

As an embodiment, the first condition depends on the first reporting configuration.

As an embodiment, the first reporting configuration indicates frequency domain resources to which the first CSI set is related; and the first condition is related to the frequency domain resources to which the first CSI set is related.

As an embodiment, the first reporting configuration indicates frequency domain resources to which the first CSI set is related; and the frequency domain resources to which the first CSI set is related are used for determining the first condition.

As an embodiment, the first reporting configuration indicates frequency domain resources to which the first CSI set is related; and the first condition depends on the frequency domain resources to which the first CSI set is related.

As an embodiment, the first condition is related to whether the frequency domain resources to which the first CSI set is related overlap with the first frequency domain resource.

As an embodiment, the first condition depends on whether the frequency domain resources to which the first CSI set is related overlap with the first frequency domain resource.

As an embodiment, whether the frequency domain resources to which the first CSI set is related overlap with the first frequency domain resource is used for determining the first condition.

As an embodiment, when the frequency domain resources to which the first CSI set is related overlap with the first frequency domain resource, the first condition includes that the first transmission occasion is orthogonal with the first time domain resource in the time domain.

As an embodiment, when the frequency domain resources to which the first CSI set is related overlap with the first frequency domain resource, the first condition includes that the first transmission occasion includes at least one symbol that does not belong to the first time domain resource.

As an embodiment, when the frequency domain resources to which the first CSI set is related are orthogonal with the first frequency domain resource, the first condition includes that the first transmission occasion overlaps with the first time domain resource in the time domain.

As an embodiment, when the frequency domain resources to which the first CSI set is related are orthogonal with the first frequency domain resource, the first condition includes that all symbols occupied by the first transmission occasion belong to the first time domain resource.

As an embodiment, when the frequency domain resources to which the first CSI set is related overlap with the first frequency domain resource, the first condition includes that the first transmission occasion overlaps with the first time domain resource in the time domain.

As an embodiment, when the frequency domain resources to which the first CSI set is related are orthogonal with the first frequency domain resource, the first condition includes that the first transmission occasion is orthogonal with the first time domain resource in the time domain.

As an embodiment, the first condition is related to whether the first reporting configuration is configured with a second higher layer parameter.

As an embodiment, the first condition is related to the value of the second higher layer parameter configured for the first reporting configuration.

As an embodiment, whether the first reporting configuration is configured with the second higher layer parameter is used for determining the first condition.

As an embodiment, the second higher layer parameter configured for first reporting configuration is used for determining the first condition.

As an embodiment, the first condition depends on whether the first reporting configuration is configured with a second higher layer parameter.

As an embodiment, the first condition depends on the value of the second higher layer parameter configured for the first reporting configuration.

As an embodiment, when the first reporting configuration is configured with the second higher layer parameter, the first condition includes that the first transmission occasion is orthogonal with the first time domain resource in the time domain.

As an embodiment, when the first reporting configuration is configured with the second higher layer parameter, the first condition includes that the first transmission occasion occupies at least one symbol that does not belong to the first time domain resource.

As an embodiment, when the first reporting configuration is configured with the second higher layer parameter, the first condition includes that the first transmission occasion overlaps with the first time domain resource in the time domain.

As an embodiment, when the first reporting configuration is configured with the second higher layer parameter, the first condition includes that all symbols occupied by the first transmission occasion belong to the first time domain resource.

As an embodiment, when the first reporting configuration is not configured with the second higher layer parameter, the first condition includes that the first transmission occasion overlaps with the first time domain resource in the time domain.

As an embodiment, when the first reporting configuration is not configured with the second higher layer parameter, the first condition includes that all symbols occupied by the first transmission occasion belong to the first time domain resource in the time domain.

As an embodiment, when the first reporting configuration is not configured with the second higher layer parameter, the first condition includes that the first transmission occasion is orthogonal with the first time domain resource in the time domain.

As an embodiment, when the first reporting configuration is not configured with the second higher layer parameter, the first condition includes that the first transmission occasion occupies at least one symbol that does not belong to the first time domain resource.

As an embodiment, when the first reporting configuration is configured with the second higher layer parameter and the value of the second higher layer parameter belongs to a first parameter value set, the first condition includes that the first transmission occasion overlaps with the first time domain resource in the time domain.

As an embodiment, when the first reporting configuration is configured with the second higher layer parameter and the value of the second higher layer parameter belongs to a first parameter value set, the first condition includes that all symbols occupied by the first transmission occasion belong to the first time domain resource.

As an embodiment, when the first reporting configuration is configured with the second higher layer parameter and the value of the second higher layer parameter belongs to a second parameter value set, the first condition includes that the first transmission occasion is orthogonal with the first time domain resource in the time domain.

As an embodiment, when the first reporting configuration is configured with the second higher layer parameter and the value of the second higher layer parameter belongs to a second parameter value set, the first condition includes that the first transmission occasion occupies at least one symbol that does not belong to the first time domain resource.

As an embodiment, the first parameter value set includes at least one parameter value, and any parameter value in the first parameter value set is a candidate value for the second higher layer parameter.

As an embodiment, the second parameter value set includes at least one parameter value, and any parameter value in the second parameter value set is a candidate value for the second higher layer parameter.

As an embodiment, no common parameter value exists between the first parameter value set and the second parameter value set.

As an embodiment, the second higher layer parameter is used for determining whether the first condition includes that the first transmission occasion overlaps with the first time domain resource in the time domain or includes that the first transmission occasion is orthogonal with the first time domain resource in the time domain.

As an embodiment, the second higher layer parameter is used for indicating which reference signal transmission occasions are used for obtaining channel measurement used for calculating CSI corresponding to the first reporting configuration.

As an embodiment, the second higher layer parameter is used for indicating whether reference signal transmission occasions that overlap with time domain resources in a full duplex mode are used for obtaining channel measurement used for calculating CSI corresponding to the first reporting configuration.

As an embodiment, the second higher layer parameter is used for indicating whether reference signal transmission occasions that are orthogonal with time domain resources in a full duplex mode are used for obtaining channel measurement used for calculating CSI corresponding to the first reporting configuration.

### Embodiment 11

Embodiment 11 provides a schematic diagram of a first condition according to an embodiment of this application, as shown in FIG. 11. In Embodiment 11, the first condition is related to time domain resources occupied by the first CSI set.

As an embodiment, the time domain resources occupied by the first CSI set mean time domain resources occupied by PUSCHs or PUCCHs of the first CSI set.

As an embodiment, whether the first condition includes that the first transmission occasion overlaps with the first time domain resource in the time domain or includes that the first transmission occasion is orthogonal with the first time domain resource in the time domain is related to time domain resources occupied by the first CSI set.

As an embodiment, time domain resources occupied by the first CSI set are used for determining the first condition.

As an embodiment, the first condition depends on time domain resources occupied by the first CSI set.

As an embodiment, the first condition is related to whether the time domain resources occupied by the first CSI set overlap with the first time domain resource.

As an embodiment, whether the time domain resources occupied by the first CSI set overlap with the first time domain resource is used for determining the first condition.

As an embodiment, the first condition depends on whether the time domain resources occupied by the first CSI set overlap with the first time domain resource.

As an embodiment, when the time domain resources occupied by the first CSI set overlap with the first time domain resource, the first condition includes that the first transmission occasion overlaps with the first time domain resource in the time domain.

As an embodiment, when the time domain resources occupied by the first CSI set overlap with the first time domain resource, the first condition includes that all symbols occupied by the first transmission occasion belong to the first time domain resource.

As an embodiment, when the time domain resources occupied by the first CSI set are orthogonal with the first time domain resource, the first condition includes that the first transmission occasion is orthogonal with the first time domain resource in the time domain.

As an embodiment, when the time domain resources occupied by the first CSI set are orthogonal with the first time domain resource, the first condition includes that the first transmission occasion occupies at least one symbol that does not belong to the first time domain resource.

As an embodiment, when the time domain resources occupied by the first CSI set overlap with the first time domain resource, the first condition includes that the first transmission occasion is orthogonal with the first time domain resource in the time domain.

As an embodiment, when the time domain resources occupied by the first CSI set are orthogonal with the first time domain resource, the first condition includes that the first transmission occasion overlaps with the first time domain resource in the time domain.

As an embodiment, the first condition is related to the first reference resource.

As an embodiment, the first condition is related to time domain resources occupied by the first reference resource.

As an embodiment, the first condition depends on whether the time domain resources occupied by the first reference resource overlap with the first time domain resource.

As an embodiment, when the time domain resources occupied by the first reference resource overlap with the first time domain resource, the first condition includes that the first transmission occasion overlaps with the first time domain resource in the time domain.

As an embodiment, when the time domain resources occupied by the first reference resource are orthogonal with the first time domain resource, the first condition includes that the first transmission occasion is orthogonal with the first time domain resource in the time domain.

### Embodiment 12

Embodiment 12 provides a schematic diagram of whether a first transmission occasion belongs to a first transmission occasion set depending on whether a first condition is met if and only if a second condition is met according to an embodiment of this application, as shown in FIG. 12.

As an embodiment, whether the second condition is met is used for determining whether the first transmission occasion belongs to or does not belong to the first transmission occasion set depends on the first condition.

As an embodiment, whether the second first condition is met is used for determining whether the first transmission occasion belongs to the first transmission occasion set depends on or does not depend on the first condition.

As an embodiment, the first node determines, based on whether the second condition is met, whether the first transmission occasion belongs to or does not belong to the first transmission occasion set depends on the first condition.

As an embodiment, whether the first transmission occasion belongs to or does not belong to the first transmission occasion set depends on the first condition is related to whether the second condition is met.

As an embodiment, when the second condition is met, whether the first transmission occasion belongs to the first transmission occasion set depends on whether the first condition is met.

As an embodiment, when the second condition is not met, whether the first transmission occasion belongs to the first transmission occasion set does not depend on whether the first condition is met.

As an embodiment, when the second condition is not met, whether the first condition is met is not used for determining whether the first transmission occasion belongs to the first transmission occasion set.

As an embodiment, the second condition includes: the first node is configured with a third higher layer parameter.

As an embodiment, the second condition includes: the first node is configured with a third higher layer parameter and the value of the third higher layer parameter configured for the first node belongs to a third parameter value set.

As an embodiment, the second condition includes: the first reporting configuration is configured with a third higher layer parameter.

As an embodiment, the second condition includes: the first reporting configuration is configured with a third higher layer parameter and the value of the third higher layer parameter configured for the first reporting configuration belongs to a third parameter value set.

As an embodiment, whether the third higher layer parameter is used for determining whether the first transmission occasion belongs to or does not belong to the first transmission occasion set depends on the first condition.

As an embodiment, the third higher layer parameter is used for indicating which reference signal transmission occasions are used for obtaining channel measurement used for calculating CSI corresponding to the first reporting configuration.

As an embodiment, the third higher layer parameter is used for indicating whether which reference signal transmission occasions are used for obtaining channel measurement used for calculating CSI corresponding to the first reporting configuration depends on which symbols are used in a full duplex mode.

As an embodiment, the third higher layer parameter is used for indicating whether reference signal transmission occasions that overlap with time domain resources in a full duplex mode are used for obtaining channel measurement used for calculating CSI corresponding to the first reporting configuration.

As an embodiment, the third higher layer parameter is used for indicating whether reference signal transmission occasions that are orthogonal with time domain resources in a full duplex mode are used for obtaining channel measurement used for calculating CSI corresponding to the first reporting configuration.

As an embodiment, when the first reporting configuration is configured with the third higher layer parameter, the second condition is met.

As an embodiment, when the first reporting configuration is not configured with the third higher layer parameter, the second condition is not met.

As an embodiment, when the first reporting configuration is configured with the third higher layer parameter and the value of the third higher layer parameter configured for the first reporting configuration belongs to the third parameter value set, the second condition is met.

As an embodiment, when the first reporting configuration is configured with the third higher layer parameter and the value of the third higher layer parameter configured for the first reporting configuration does not belong to the third parameter value set, the second condition is not met.

As an embodiment, the third parameter value set includes at least one parameter value, and any parameter value in the third parameter value set is a candidate value for the third higher layer parameter.

As an embodiment, the third higher layer parameter has at least one candidate value that does not belong to the third parameter value set.

As an embodiment, the first DCI is used for triggering the first CSI set, and the second condition is related to the first DCI.

As an embodiment, the first DCI is used for determining whether the second condition is met.

As an embodiment, the second condition includes: the first DCI indicates whether the first transmission occasion belongs to the first transmission occasion set depends on whether the first condition is met.

As an embodiment, the second condition is related to time domain resources occupied by the first DCI.

As an embodiment, the second condition includes: time domain resources occupied by the first DCI overlap with the first time domain resource.

As an embodiment, when time domain resources occupied by the first DCI overlap with the first time domain resource, the second condition is met.

As an embodiment, when time domain resources occupied by the first DCI are orthogonal with the first time domain resource, the second condition is not met.

As an embodiment, the second condition is related to a CORESET or a search space set to which the first DCI belongs.

As an embodiment, a CORESET or a search space set to which the first DCI belongs is used for determining whether the second condition is met.

As an embodiment, the second condition is related to an RNTI used for scrambling (Scramble) the CRC of the first DCI.

As an embodiment, the RNTI used for scrambling the CRC of the first DCI is used for determining whether the second condition is met.

As an embodiment, the first reporting configuration is used for determining a second frequency domain resource, and frequency domain resources to which the first CSI set is related are the second frequency domain resource; and the second condition is related to the second time-frequency resource.

As an embodiment, the second condition is related to whether the second time-frequency resource overlaps with the first time-frequency resource.

As an embodiment, the second condition is related to whether the time domain resources occupied by the first CSI set overlap with the first time domain resource.

As an embodiment, the second condition is related to the first reference resource.

As an embodiment, the second condition is related to time domain resources occupied by the first reference resource.

As an embodiment, the second condition is related to whether the time domain resources occupied by the first reference resource overlap with the first time domain resource.

As an embodiment, the second condition includes: time domain resources occupied by the first reference resource overlap with the first time domain resource.

As an embodiment, the second condition includes: time domain resources occupied by the first reference resource are orthogonal with the first time domain resource.

### Embodiment 13

Embodiment 13 is a schematic diagram of a first reporting configuration being used for determining a second frequency domain resource according to an embodiment of this application, as shown in FIG. 13.

As an embodiment, the first reporting configuration is used by the first node for determining the second frequency domain resource.

As an embodiment, the first reporting configuration indicates the second frequency domain resource.

As an embodiment, a higher layer parameter "reportFreqConfiguration" of the first reporting configuration indicates the second frequency domain resource.

As an embodiment, a higher layer parameter "csi-ReportingBand" of the first reporting configuration indicates the second frequency domain resource.

As an embodiment, the second frequency domain resource includes at least one RB.

As an embodiment, the second frequency domain resource includes at least one subband.

As an embodiment, the second frequency domain resource includes a plurality of subbands the are contiguous in a frequency domain.

As an embodiment, the second frequency domain resource includes a plurality of subbands that are not contiguous in the frequency domain.

As an embodiment, one subband includes one or more RBs that are contiguous in the frequency domain.

As an embodiment, the second frequency domain resource includes at least one subband in a second BWP.

As an embodiment, apart from subbands located at edges of the second BWP, each of other subbands in the second BWP includes the same number of RBs.

As an embodiment, when the number of RBs included in the second BWP is equal to A1, the number of RBs included in each of other subbands other than the subbands located at the edges of the second BWP in the second BWP is equal to B1; when the number of RBs included in the second BWP is equal to A2, the number of RBs included in each of other subbands other than the subbands located at the edges of the second BWP in the second BWP is equal to B2; and A1 is greater than A2, and B1 is not less than B2.

As an embodiment, apart from subbands located at edges of the second BWP, the number of RBs included in any subband in the second BWP is P1, and P1 is a positive integer greater than 1.

As an embodiment, P1 is an integer multiple of 4.

As an embodiment, P1 is indicated by higher layer signaling.

As an embodiment, P1 is related to the number of RBs included in the second BWP.

As an embodiment, if the second frequency domain resource includes a starting subband in the second BWP, the number of RBs included in the starting subband is P1 - (Ns mod P1); and if the second frequency domain resource includes the last (last) subband in the second BWP, the number of RBs included in the last subband is (Ns + Nw) mod P1 or is P1, where Ns is an index of a starting RB of the second BWP, and Nw is the number of RBs included in the second BWP.

As a sub-embodiment of the foregoing embodiment, Ns is an index of the starting RB relative to a common RB 0 (common RB 0).

As an embodiment, a subcarrier spacing corresponding to one RB or one subband is fixed.

As an embodiment, a subcarrier spacing corresponding to one RB or one subband changes with a frequency range (Frequency Range) to which the second BWP belongs.

As an embodiment, a subcarrier spacing corresponding to one RB or one subband is a subcarrier spacing of the second BWP.

As an embodiment, the second BWP is a BWP in which the first reference signal resource set is located.

As an embodiment, the second BWP is the first BWP.

As an embodiment, the second BWP is different from the first BWP.

It should be noted that, unless specifically emphasized, the subbands included in frequency domain resources (or frequency bands) to which the first CSI set is related are independent of "subbands" in SBFD. The latter is a broader concept and is currently under discussion.

As an embodiment, the frequency domain resources (or frequency bands) to which the first CSI set is related include: frequency domain resources (or bands) occupied by CSI reference resources (reference resource) of the first CSI set.

As an embodiment, the frequency domain resources (or frequency bands) to which the first CSI set is related include: frequency domain resources (or frequency bands) to which any CSI included in the first CSI set is related.

As an embodiment, the frequency domain resources (or frequency bands) to which the first CSI set is related include: one or more subbands for which CSI needs to be reported in the first CSI set.

As an embodiment, the frequency domain resources (or frequency bands) to which the first CSI set is related include: one or more subbands on which channel measurement or interference measurement provides the basis for calculating CSI in the first CSI set.

As an embodiment, the frequency domain resources (or frequency bands) to which the first CSI set is related include: one or more subbands for which CSI in the first CSI set reports channel information.

As an embodiment, frequency domain resources to which any CSI in the first CSI set is related belongs to the second frequency domain resource.

As an embodiment, any CSI in the first CSI set is calculated based on channel measurement in the second frequency domain resource.

As an embodiment, any CSI in the first CSI set is calculated based on interference measurement in the second frequency domain resource.

As an embodiment, the second frequency domain resource is used for determining frequency domain resources occupied by the first reference resource.

As an embodiment, the first reference resource is defined as the second frequency domain resource in the frequency domain.

As an embodiment, for any reference signal resource in the first reference signal resource set, each RB included in the second frequency domain resource is an RB that the any reference signal resource spans across.

### Embodiment 14

Embodiment 14 provides a schematic diagram of a second condition including a second frequency domain resource overlapping with a first frequency domain resource according to an embodiment of this application, as shown in FIG. 14.

As an embodiment, symbols in the first time domain resource are configured as uplink in the first frequency domain resource.

As an embodiment, symbols in the first time domain resource are configured as downlink in RBs in a first BWP that do not belong to the first frequency domain resource.

As an embodiment, symbols in the first time domain resource are configured as downlink in RBs in a first BWP that do not belong to the first frequency domain resource and do not belong to a guard band.

As an embodiment, symbols in the first time domain resource are used for uplink in the first frequency domain resource.

As an embodiment, symbols in the first time domain resource are used for downlink in RBs in a first BWP that do not belong to the first frequency domain resource.

As an embodiment, symbols in the first time domain resource are used for downlink in RBs in a first BWP that do not belong to the first frequency domain resource and do not belong to a guard band.

As an embodiment, the first frequency domain resource includes a plurality of RBs.

As an embodiment, the first frequency domain resource is a default.

As an embodiment, the first frequency domain resource does not need to be configured.

As an embodiment, the first frequency domain resource is configurable.

As an embodiment, the first frequency domain resource is related to a frequency range (Frequency Range) to which the first BWP belongs.

As an embodiment, the first frequency domain resource is related to a size of the first BWP.

As an embodiment, the first frequency domain resource is related to a subcarrier spacing of the first BWP.

As an embodiment, when the second frequency domain resource overlaps with the first frequency domain resource, the second condition is met.

As an embodiment, when the second frequency domain resource is orthogonal with the first frequency domain resource, the second condition is not met.

As an embodiment, when the second frequency domain resource includes at least one RB that belongs to the first frequency domain resource, the second condition is met.

As an embodiment, the second condition includes: the second frequency domain resource overlaps with the first frequency domain resource; and the first condition includes: the first transmission occasion is orthogonal with the first time domain resource in the time domain.

As an embodiment, in a case that the second frequency domain resource overlaps with the first frequency domain resource, only when the first transmission occasion is orthogonal with the first time domain resource in the time domain, the first transmission occasion belongs to the first transmission occasion set.

### Embodiment 15

Embodiment 15 provides a schematic diagram of a first information block being used for determining a first frequency domain resource according to an embodiment of this application, as shown in FIG. 15.

As an embodiment, the first information block is used by the first node for determining the first frequency domain resource.

As an embodiment, the first information block configures symbols in the first time domain resource as uplink in a first frequency domain resource.

As an embodiment, the first information block configures symbols in the first time domain resource as downlink in RBs in a first BWP that do not belong to the first frequency domain resource.

As an embodiment, the first information block configures symbols in the first time domain resource as downlink in RBs in a first BWP that do not belong to the first frequency domain resource and do not belong to a guard band.

As an embodiment, the first information block indicates the first frequency domain resource.

As an embodiment, the first information block indicates a starting RB of the first frequency domain resource and the number of RBs included in the first frequency domain resource.

As an embodiment, the first information block indicates the first frequency domain resource by indicating the third frequency domain resource.

As an embodiment, the first information block indicates the first frequency domain resource by indicating a guard bandwidth.

As an embodiment, the first information block indicates the first frequency domain resource by indicating the third frequency domain resource and a guard bandwidth.

### Embodiment 16

Embodiment 16 is a schematic diagram of a second condition including time domain resources occupied by a first CSI set overlapping with a first time domain resource according to an embodiment of this application, as shown in FIG. 16.

As an embodiment, the time domain resources occupied by the first CSI set mean time domain resources occupied by physical channels of the first CSI set.

As an embodiment, time domain resources occupied by the first CSI set are configured by using RRC signaling.

As an embodiment, time domain resources occupied by the first CSI set are configured by using a MAC CE.

As an embodiment, time domain resources occupied by the first CSI set are indicated by DCI.

As an embodiment, time domain resources occupied by the first CSI set are indicated by the first DCI.

As an embodiment, when time domain resources occupied by the first CSI set overlap with the first time domain resource, the second condition is met.

As an embodiment, when time domain resources occupied by the first CSI set are orthogonal with the first time domain resource, the second condition is not met.

### Embodiment 17

Embodiment 17 is a schematic diagram of a first time domain resource being used for determining a first reference resource according to an embodiment of this application, as shown in FIG. 17.

As an embodiment, the first reference resource depends on the first time domain resource.

As an embodiment, the first time domain resource is used for determining time domain resources occupied by the first reference resource.

As an embodiment, the first reference resource belongs to the first time domain resource in a time domain.

As an embodiment, the first reference resource includes at least one symbol that belongs to the first time domain resource.

As an embodiment, the first reference resource orthogonal with the first time domain resource in the time domain.

As an embodiment, the first reference resource includes at least one symbol that does not belong to the first time domain resource.

As an embodiment, the first reference resource is related to the first condition.

As an embodiment, a relationship between the first reference resource and the first time domain resource is related to the first condition.

As an embodiment, when the first condition includes that the first transmission occasion overlaps with the first time domain resource in the time domain, the first reference resource overlaps with the first time domain resource in the time domain.

As an embodiment, when the first condition includes that the first transmission occasion overlaps with the first time domain resource in the time domain, the first reference resource belongs to the first time domain resource in the time domain.

As an embodiment, when the first condition includes that the first transmission occasion is orthogonal with the first time domain resource in the time domain, the first reference resource orthogonal with the first time domain resource in the time domain.

As an embodiment, when the first condition includes that the first transmission occasion is orthogonal with the first time domain resource in the time domain, the first reference resource includes at least one symbol that does not belong to the first time domain resource.

As an embodiment, when the first condition includes that all symbols occupied by the first transmission occasion belong to the first time domain resource, the first reference resource belongs to the first time domain resource in the time domain.

As an embodiment, when the first condition includes that all symbols occupied by the first transmission occasion belong to the first time domain resource, the first reference resource overlaps with the first time domain resource in the time domain.

As an embodiment, when the first condition includes that the first transmission occasion occupies at least one symbol that does not belong to the first time domain resource, the first reference resource includes at least one symbol that does not belong to the first time domain resource.

As an embodiment, when the first condition includes that the first transmission occasion occupies at least one symbol that does not belong to the first time domain resource, the first reference resource orthogonal with the first time domain resource in the time domain.

As an embodiment, when the first condition includes that the first transmission occasion occupies at least one symbol that does not belong to the first time domain resource, the first reference resource orthogonal with the first time domain resource in the time domain.

As an embodiment, the first reference resource is defined by a slot n2 in the time domain, and the first CSI set occupies a slot n1; n2 is linearly correlated with n, n1 is used for determining n, and a linear coefficient between n2 and n is equal to 1; n2 is linearly correlated with a first offset, and the first offset is related to the first time domain resource; and both n and the first offset are integers.

As a sub-embodiment of the foregoing embodiment, n is linearly correlated with the floor of the product of n1 and a first ratio and corresponds to a linear coefficient being 1; and a downlink subcarrier spacing configuration and an uplink subcarrier spacing configuration are used for determining the first ratio.

As a sub-embodiment of the foregoing embodiment, a linear coefficient between n2 and the first offset is equal to -1.

As a sub-embodiment of the foregoing embodiment, the first offset enables the first reference resource to belong to the first time domain resource in the time domain.

As a sub-embodiment of the foregoing embodiment, the first offset enables the first reference resource to include at least one symbol that belongs to the first time domain resource.

As a sub-embodiment of the foregoing embodiment, the first offset enables the first reference resource to be orthogonal with the first time domain resource in the time domain.

As a sub-embodiment of the foregoing embodiment, the first offset enables the first reference resource to include at least one symbol that does not belong to the first time domain resource.

As a sub-embodiment of the foregoing embodiment, the first offset is greater than or equal to a second threshold and enables a slot n2 to correspond to a minimum value of a valid (valid) downlink slot located in the first time domain resource; and the second threshold is an integer.

As a sub-embodiment of the foregoing embodiment, the first offset is greater than or equal to a second threshold and enables a slot n2 to correspond to a minimum value of a valid (valid) downlink slot that overlaps with the first time domain resource in the time domain; and the second threshold is an integer.

As a sub-embodiment of the foregoing embodiment, the first offset is related to the first condition.

As a sub-embodiment of the foregoing embodiment, when the first condition includes that the first transmission occasion overlaps with the first time domain resource in the time domain or the first condition includes that all symbols occupied by the first transmission occasion belong to the first time domain resource, the first offset enables the first reference resource to belong to the first time domain resource in the time domain, or the first offset enables the first reference resource to overlap with the first time domain resource in the time domain.

As a sub-embodiment of the foregoing embodiment, when the first condition includes that the first transmission occasion is orthogonal with the first time domain resource in the time domain or the first condition includes that the first transmission occasion occupies at least one symbol that does not belong to the first time domain resource, the first offset enables the first reference resource to be orthogonal with the first time domain resource in the time domain, or the first offset enables the first reference resource to include at least one symbol that does not belong to the first time domain resource.

As a sub-embodiment of the foregoing embodiment, the first condition includes that the first transmission occasion overlaps with the first time domain resource in the time domain, and the first offset is greater than or equal to a second threshold and enables a slot n2 to correspond to a minimum value of a valid downlink slot that overlaps with the first time domain resource in the time domain; or the first condition includes that the first transmission occasion is orthogonal with the first time domain resource in the time domain, and the first offset is greater than or equal to a second threshold and enables a slot n2 to correspond to a minimum value of a valid downlink slot that is orthogonal with the first time domain resource in the time domain; and the second threshold is an integer.

As an embodiment, the downlink subcarrier spacing configuration is a subcarrier spacing configuration corresponding to the first reference signal resource set.

As an embodiment, the uplink subcarrier spacing configuration is a subcarrier spacing configuration corresponding to the first CSI set.

As an embodiment, the second threshold is related to the downlink subcarrier spacing configuration.

As an embodiment, the second threshold is related to a delay requirement (delay requirement).

### Embodiment 18

Embodiment 18 provides a structural block diagram of a processing apparatus for a first node according to an embodiment of this application, as shown in FIG. 18. In FIG. 18, a processing apparatus 1800 in the first node includes a first receiver 1801 and a first transmitter 1802.

In embodiment 18, the first receiver 1801 receives a first information block and a first reporting configuration; and the first transmitter 1802 transmits a first CSI set.

In Embodiment 18, the first information block is used for determining a first time domain resource, and the first reporting configuration is used for determining a first reference signal resource set. The first reporting configuration is applied to the first CSI set; only a reference signal in a first transmission occasion set that is associated with the first reference signal resource set is used for obtaining channel measurement for calculating the first CSI set; the first time domain resource includes at least one symbol; a first transmission occasion is one transmission occasion for a reference signal associated with the first reference signal resource set, the first transmission occasion is not later than a first reference resource in a time domain, and the first reference resource is a CSI reference resource of the first CSI set; and whether the first transmission occasion belongs to the first transmission occasion set depends on whether a first condition is met, and the first condition is related to whether the first transmission occasion overlaps with the first time domain resource in the time domain.

As an embodiment, the first condition is related to the first reporting configuration.

As an embodiment, the first condition is related to time domain resources occupied by the first CSI set.

As an embodiment, if and only if the second condition is met, whether the first transmission occasion belongs to the first transmission occasion set depends on whether the first condition is met.

As an embodiment, the first reporting configuration is used for determining a second frequency domain resource, and frequency domain resources to which the first CSI set is related are the second frequency domain resource; and the second condition includes: the second frequency domain resource overlaps with a first frequency domain resource.

As an embodiment, the first information block is used for determining the first frequency domain resource.

As an embodiment, the second condition includes: time domain resources occupied by the first CSI set overlap with the first time domain resource.

As an embodiment, the first receiver 1801 receives the reference signal in at least one reference signal resource in the first reference signal resource set.

As an embodiment, the first node is a user equipment.

As an embodiment, the first node is a relay node device.

As an embodiment, the first reporting configuration is one CSI reporting configuration; any transmission occasion in the first transmission occasion set is not later than the first reference resource in the time domain; frequency domain resources to which the first CSI set is related are used for determining frequency domain resources occupied by the first reference resource; time domain resources occupied by the first CSI set are used for determining time domain resources occupied by the first reference resource; when the first condition is not met, the first transmission occasion does not belong to the first transmission occasion set; and symbols in the first time domain resource are used for uplink in the first frequency domain resource.

As a sub-embodiment of the foregoing embodiment, symbols in the first time domain resource are used for downlink in the third frequency domain resource; the first frequency domain resource and the third frequency domain resource are orthogonal with each other in a frequency domain; and the first frequency domain resource and the third frequency domain resource belong to one same BWP.

As an embodiment, the first receiver 1801 includes at least one of the antenna 452, the receiver 454, the receive processor 456, the multi-antenna receive processor 458, the controller/processor 459, the memory 460, and the data source 467 in Embodiment 4.

As an embodiment, the first transmitter 1802 includes at least one of the antenna 452, the transmitter 454, the transmit processor 468, the multi-antenna transmit processor 457, the controller/processor 459, the memory 460, and the data source 467 in Embodiment 4.

### Embodiment 19

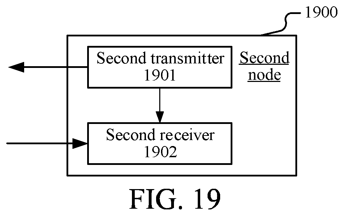

Embodiment 19 provides a structural block diagram of a processing apparatus for a second node according to an embodiment of this application, as shown in FIG. 19. In FIG. 19, a processing apparatus 1900 in the second node includes a second transmitter 1901 and a second receiver 1902.

In embodiment 19, the second transmitter 1901 transmits a first information block and a first reporting configuration; and the second receiver 1902 receives a first CSI set.

In Embodiment 19, the first information block is used for determining a first time domain resource, and the first reporting configuration is used for determining a first reference signal resource set. The first reporting configuration is applied to the first CSI set; only a reference signal in a first transmission occasion set that is associated with the first reference signal resource set is used for obtaining channel measurement for calculating the first CSI set; the first time domain resource includes at least one symbol; a first transmission occasion is one transmission occasion for a reference signal associated with the first reference signal resource set, the first transmission occasion is not later than a first reference resource in a time domain, and the first reference resource is a CSI reference resource of the first CSI set; and whether the first transmission occasion belongs to the first transmission occasion set depends on whether a first condition is met, and the first condition is related to whether the first transmission occasion overlaps with the first time domain resource in the time domain.

As an embodiment, the first condition is related to the first reporting configuration.

As an embodiment, the first condition is related to time domain resources occupied by the first CSI set.

As an embodiment, if and only if the second condition is met, whether the first transmission occasion belongs to the first transmission occasion set depends on whether the first condition is met.

As an embodiment, the first reporting configuration is used for determining a second frequency domain resource, and frequency domain resources to which the first CSI set is related are the second frequency domain resource; and the second condition includes: the second frequency domain resource overlaps with a first frequency domain resource.

As an embodiment, the first information block is used for determining the first frequency domain resource.

As an embodiment, the second condition includes: time domain resources occupied by the first CSI set overlap with the first time domain resource.

As an embodiment, the second transmitter 1901 transmits the reference signal in at least one reference signal resource in the first reference signal resource set.

As an embodiment, the second node is a base station device.

As an embodiment, the second node is a user equipment.

As an embodiment, the second node is a relay node device.

As an embodiment, the first reporting configuration is one CSI reporting configuration; any transmission occasion in the first transmission occasion set is not later than the first reference resource in the time domain; frequency domain resources to which the first CSI set is related are used for determining frequency domain resources occupied by the first reference resource; time domain resources occupied by the first CSI set are used for determining time domain resources occupied by the first reference resource; when the first condition is not met, the first transmission occasion does not belong to the first transmission occasion set; and symbols in the first time domain resource are used for uplink in the first frequency domain resource.

As a sub-embodiment of the foregoing embodiment, symbols in the first time domain resource are used for downlink in the third frequency domain resource; the first frequency domain resource and the third frequency domain resource are orthogonal with each other in a frequency domain; and the first frequency domain resource and the third frequency domain resource belong to one same BWP.

As an embodiment, the second transmitter 1901 includes at least one of the antenna 420, the transmitter 418, the transmit processor 416, the multi-antenna transmit processor 471, the controller/processor 475, and the memory 476 in Embodiment 4.

As an embodiment, the second receiver 1902 includes at least one of the antenna 420, the receiver 418, the receive processor 470, the multi-antenna transmit processor 471, the controller/processor 475, and the memory 476 in Embodiment 4.

A person having ordinary skill in the art may understand that all or some of the steps in the foregoing methods may be implemented by a program instructing relevant hardware. The program may be stored in a computer-readable storage medium, for example, a read-only memory, a hard disk, or an optical disc. Optionally, all or some of the steps in the foregoing embodiments may be alternatively implemented by using one or more integrated circuits. Correspondingly, the module units in the foregoing embodiments may be implemented as hardware or may be implemented as a software functional module. This application is not limited to a combination of software and hardware in any specific form. The user equipment or terminal or UE in this application includes, but is not limited to, an unmanned aerial vehicle, a wireless module on an unmanned aerial vehicle, a remote control plane, an aircraft, a small airplane, a mobile phone, a tablet computer, a notebook computer, an in-vehicle communication device, a vehicle, an automobile, an RSU, a wireless sensor, an Internet adapter, an Internet of Things terminal, an RFID terminal, an NB-IOT terminal, an MTC (Machine Type Communication, Machine Type Communication) terminal, an eMTC (enhanced MTC, enhanced MTC) terminal, a data card, an Internet adapter, an in-vehicle communication device, a low-cost mobile phone, a low-cost tablet computer, among other wireless communication devices. The base station or system device in this application includes, but is not limited to, a macrocellular base station, a microcellular base station, a small cellular base station, a home base station, a relay base station, an eNB, a gNB, a TRP (Transmitter Receiver Point, transmitter receiver point), a GNSS, a relay satellite, a satellite base station, an air base station, an RSU (Road Side Unit, road side unit), an unmanned aerial vehicle, or a test apparatus, for example, a transceiver apparatus that simulates some functions of a base station, a signaling test instrument, or another wireless communication device.

A person skilled in the art should understand that the present invention may be implemented in other specified forms without departing from the core or basic characteristics thereof. Therefore, the currently disclosed embodiments should be considered as descriptive rather than restrictive in any way. The scope of the present invention is determined by the appended claims rather than the foregoing description, and all modifications within the equivalent meanings and regions thereof are considered to be included therein.

## Claims

1. A first node device for wireless communication, comprising:
a first receiver, receiving a first information block and a first reporting configuration, the first information block being used for determining a first time domain resource, and the first reporting configuration being used for determining a first reference signal resource set; and
a first transmitter, transmitting a first CSI set, wherein
the first reporting configuration is applied to the first CSI set; only a reference signal in a first transmission occasion set that is associated with the first reference signal resource set is used for obtaining channel measurement for calculating the first CSI set; the first time domain resource comprises at least one symbol; a first transmission occasion is one transmission occasion for a reference signal associated with the first reference signal resource set, the first transmission occasion is not later than a first reference resource in a time domain, and the first reference resource is a CSI reference resource of the first CSI set; and whether the first transmission occasion belongs to the first transmission occasion set depends on whether a first condition is met, and the first condition is related to whether the first transmission occasion overlaps with the first time domain resource in the time domain.

2. The first node device according to claim 1, wherein the first condition is related to the first reporting configuration.

3. The first node device according to claim 1 or 2, wherein the first condition is related to time domain resources occupied by the first CSI set.

4. The first node device according to any one of claims 1 to 3, wherein if and only if a second condition is met, whether the first transmission occasion belongs to the first transmission occasion set depends on whether the first condition is met.

5. The first node device according to claim 4, wherein the first reporting configuration is used for determining a second frequency domain resource, and frequency domain resources to which the first CSI set is related are the second frequency domain resource; and the second condition comprises: the second frequency domain resource overlaps with a first frequency domain resource.

6. The first node device according to claim 5, wherein the first information block is used for determining the first frequency domain resource.

7. The first node device according to any one of claims 4 to 6, wherein the second condition comprises: the time domain resources occupied by the first CSI set overlap with the first time domain resource.

8. A second node device for wireless communication, comprising:
a second transmitter, transmitting a first information block and a first reporting configuration, the first information block being used for determining a first time domain resource, and the first reporting configuration being used for determining a first reference signal resource set; and
a second receiver, receiving a first CSI set, wherein
the first reporting configuration is applied to the first CSI set; only a reference signal in a first transmission occasion set that is associated with the first reference signal resource set is used for obtaining channel measurement for calculating the first CSI set; the first time domain resource comprises at least one symbol; a first transmission occasion is one transmission occasion for a reference signal associated with the first reference signal resource set, the first transmission occasion is not later than a first reference resource in a time domain, and the first reference resource is a CSI reference resource of the first CSI set; and whether the first transmission occasion belongs to the first transmission occasion set depends on whether a first condition is met, and the first condition is related to whether the first transmission occasion overlaps with the first time domain resource in the time domain.

9. The second node device according to claim 8, wherein the first condition is related to the first reporting configuration.

10. The second node device according to claim 8 or 9, wherein the first condition is related to time domain resources occupied by the first CSI set.

11. The second node device according to any one of claims 8 to 10, wherein if and only if a second condition is met, whether the first transmission occasion belongs to the first transmission occasion set depends on whether the first condition is met.

12. The second node device according to claim 11, wherein the first reporting configuration is used for determining a second frequency domain resource, and frequency domain resources to which the first CSI set is related are the second frequency domain resource; and the second condition comprises: the second frequency domain resource overlaps with a first frequency domain resource.

13. The second node device according to claim 12, wherein the first information block is used for determining the first frequency domain resource.

14. The second node device according to any one of claims 11 to 13, wherein the second condition comprises: the time domain resources occupied by the first CSI set overlap with the first time domain resource.

15. A method in a first node for wireless communication, comprising:
receiving a first information block and a first reporting configuration, the first information block being used for determining a first time domain resource, and the first reporting configuration being used for determining a first reference signal resource set; and
transmitting a first CSI set, wherein
the first reporting configuration is applied to the first CSI set; only a reference signal in a first transmission occasion set that is associated with the first reference signal resource set is used for obtaining channel measurement for calculating the first CSI set; the first time domain resource comprises at least one symbol; a first transmission occasion is one transmission occasion for a reference signal associated with the first reference signal resource set, the first transmission occasion is not later than a first reference resource in a time domain, and the first reference resource is a CSI reference resource of the first CSI set; and whether the first transmission occasion belongs to the first transmission occasion set depends on whether a first condition is met, and the first condition is related to whether the first transmission occasion overlaps with the first time domain resource in the time domain.

16. The method according to claim 15, wherein the first condition is related to the first reporting configuration.

17. The method according to claim 15 or 16, wherein the first condition is related to time domain resources occupied by the first CSI set.

18. The method according to any one of claims 15 to 17, wherein if and only if a second condition is met, whether the first transmission occasion belongs to the first transmission occasion set depends on whether the first condition is met.

19. The method according to claim 18, wherein the first reporting configuration is used for determining a second frequency domain resource, and frequency domain resources to which the first CSI set is related are the second frequency domain resource; and the second condition comprises: the second frequency domain resource overlaps with a first frequency domain resource.

20. The method according to claim 19, wherein the first information block is used for determining the first frequency domain resource.

21. The method according to any one of claims 18 to 20, wherein the second condition comprises: the time domain resources occupied by the first CSI set overlap with the first time domain resource.

22. A method in a second node for wireless communication, comprising:
transmitting a first information block and a first reporting configuration, the first information block being used for determining a first time domain resource, and the first reporting configuration being used for determining a first reference signal resource set; and
receiving a first CSI set, wherein
the first reporting configuration is applied to the first CSI set; only a reference signal in a first transmission occasion set that is associated with the first reference signal resource set is used for obtaining channel measurement for calculating the first CSI set; the first time domain resource comprises at least one symbol; a first transmission occasion is one transmission occasion for a reference signal associated with the first reference signal resource set, the first transmission occasion is not later than a first reference resource in a time domain, and the first reference resource is a CSI reference resource of the first CSI set; and whether the first transmission occasion belongs to the first transmission occasion set depends on whether a first condition is met, and the first condition is related to whether the first transmission occasion overlaps with the first time domain resource in the time domain.

23. The method according to claim 22, wherein the first condition is related to the first reporting configuration.

24. The method according to claim 22 or 23, wherein the first condition is related to time domain resources occupied by the first CSI set.

25. The method according to any one of claims 22 to 24, wherein if and only if a second condition is met, whether the first transmission occasion belongs to the first transmission occasion set depends on whether the first condition is met.

26. The method according to claim 25, wherein the first reporting configuration is used for determining a second frequency domain resource, and frequency domain resources to which the first CSI set is related are the second frequency domain resource; and the second condition comprises: the second frequency domain resource overlaps with a first frequency domain resource.

27. The method according to claim 26, wherein the first information block is used for determining the first frequency domain resource.

28. The method according to any one of claims 25 to 27, wherein the second condition comprises: the time domain resources occupied by the first CSI set overlap with the first time domain resource.
